## Europäisches Patentamt
## European Patent Office
## Office européen des brevets

(19)

(11) Publication number: **0 178 082**
**A2**

(12)

# EUROPEAN PATENT APPLICATION

(21) Application number: **85306550.6**

(22) Date of filing: **16.09.85**

(51) Int. Cl.⁴: **H 04 Q 1/457**

(30) Priority: **11.10.84 CA 465226**

(43) Date of publication of application: **16.04.86**
**Bulletin 86/16**

(84) Designated Contracting States: **AT DE FR GB NL SE**

(71) Applicant: **NORTHERN TELECOM LIMITED,**
**1600 Dorchester Boulevard West, Montreal Quebec (CA)**

(72) Inventor: **Koohgoli, Mahshad, 303-900 Dynes Road**
**Ottawa, Ontario Canada K2C 3L6 (CA)**

(74) Representative: **Crawford, Andrew Birkby et al, A.A.**
**THORNTON & CO. Northumberland House 303-306 High**
**Holborn, London WC1V 7LE (GB)**

(54) **Digital correlator circuit.**

㊼ A digital correlator circuit (10) suitable for use in digital tone detection circuits is disclosed. The correlator circuit (10) accepts PCM (pulse code modulated) data directly. Correlation occurs in a ROM (18) which is addressed by an address signal derived both from the PCM data (206) and from a reference binary signal (51b). The reference sigal (51b) has two quadrature phase components and the results of the correlation are accumulated in two separate storage registers (38, 39), one for each of the two quadrature components. At the end of the correlation time period, the two accumulated results are used to generate a single binary signal whose magnitude is representative of the signal power, at a selected frequency, in a group of received PCM samples.

## DIGITAL CORRELATOR CIRCUIT

This invention relates generally to frequency detection circuits, and more particularly to a correlator circuit for use in a digital tone detector.

It is well known to detect frequencies in a digital signal. U.S. patent 4,203,008 dated May 13, 1980 by S. Cohn-Sfetcu et al, U.S. patent 4,277,650 dated July 7, 1981 by I.F. Arend et al, and U.S. 4,363,100 dated December 7, 1982 by D.G. Agnew et al are but three examples of such techniques.

One well known technique is that based on cross-correlation of the incoming signal with a reference signal. This technique is sometimes referred to as quadrature amplitude detection or modified Hilbert transform.

This quadrature amplitude detection technique is described in more detail in the book "Digital and Analogue Communication Systems" by K. Shanmugan published in 1979 by John Wiley & Sons.

Quadrature amplitude detection is a well known technique as evidenced by aforementioned U.S. patent 4,363,100 and by the article "A Digital Signal Processor for PCM/TDM Tone Decoding" by M.S. Buser, Proc. Euroncon '77, Venice, Italy, May 1977, pages 2.5.51 to 2.5.56. Consequently, it will not be described in further detail.

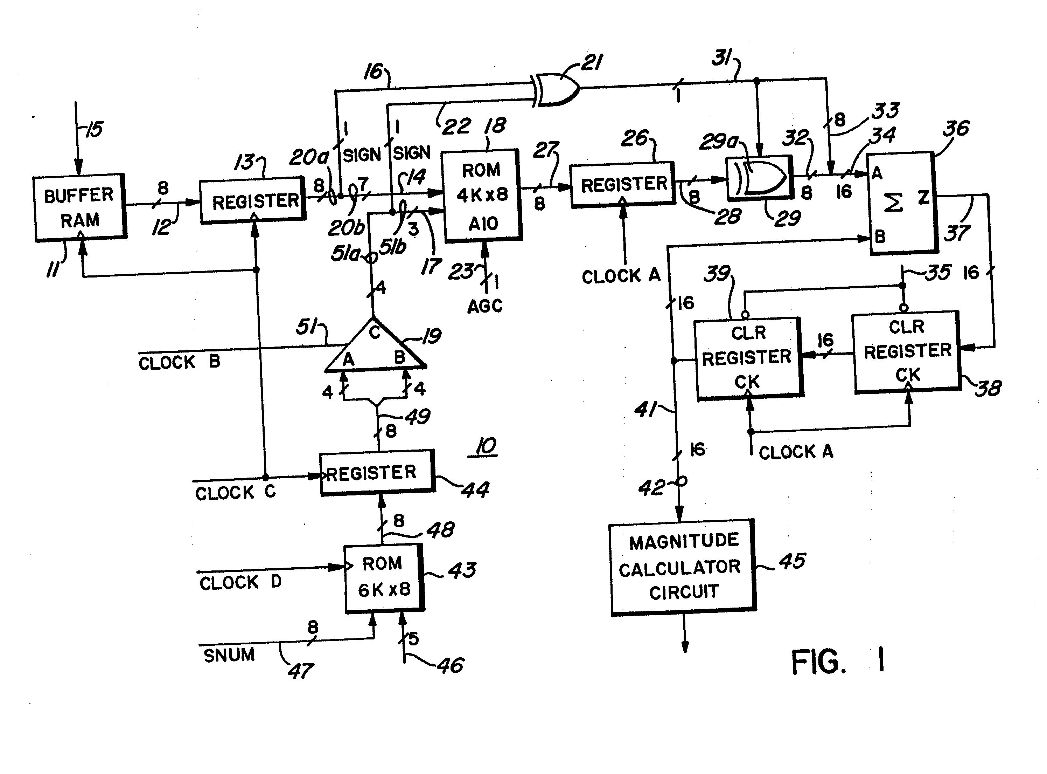

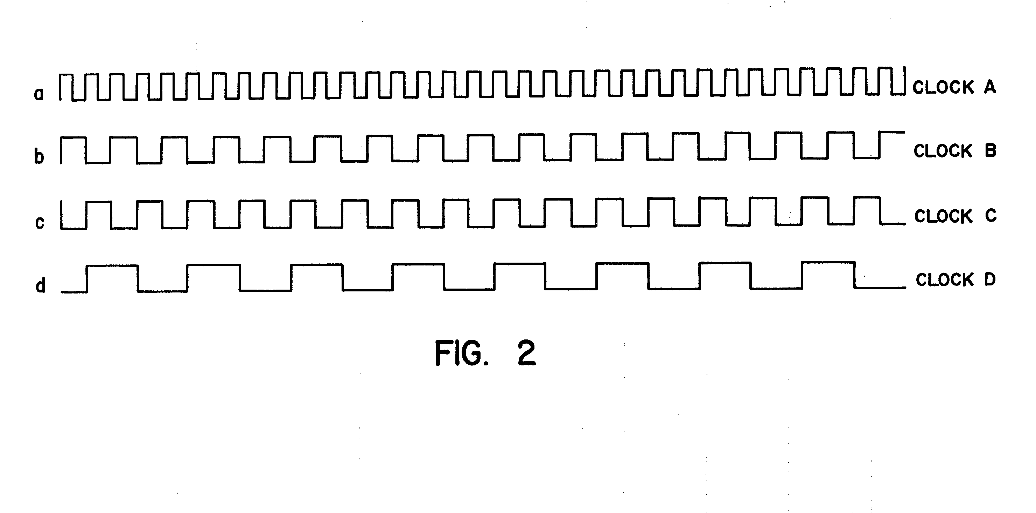

Quadrature amplitude detection circuits can be quite complex. As evidenced by the aforementioned patent to Agnew et al, the Figure 1 embodiment thereof contains two multiplication stages, three addition stages, and a delay stage. The preferred form of the Agnew et al tone detector (see Figure 2 of the Agnew et al patent) contains four addition stages, four multiplier PROMs, and two accumulator RAMs to get

2                                                    0178082

to the stage of producing signals X and Y (which is the same stage as the correlator of the present invention achieves).

## Summary of the Invention

The present invention, while based upon the general concept of quadrature amplitude detection, is an improved implementation of such a technique in that it results in more simplified operations and consequently in more simplified circuitry. To be more specific, the circuit of the present invention does not need separate multipliers; it operates directly on PCM (pulse code modulated) signals; it can be used to detect multiple frequencies (as well as single frequencies); and it is highly "pipelined" with the result that it can process many channels.

The present invention is a correlator circuit for producing digital numbers, proportional to the signal power, at a selected frequency, in a group of received digital samples, the circuit characterized by: a storage means addressed by both received digital samples and digital references signal samples; and circuit means for cummulatively producing, for each group of received digital samples, first and second accumulated signals.

## Brief Description of the Drawings

The invention will now be described in more detail with reference to the accompanying drawings, wherein:

Figure 1 is a simplified block diagram of a digital correlator circuit constructed according to the present invention;

Figure 2, comprised of parts a to d inclusive, depicts waveforms helpful in understanding the operation of the invention; and

Figure 3 depicts a portion of Figure 1 in more detail.

## Detailed Description

Figure 1 depicts a simplified block diagram of correlator circuit 10 suitable for use in tone detection equipment based upon the quadrature amplitude detection technique.

Buffer 11 contains PCM samples for the last 192 samples of the channel under consideration. Buffer 11 consists of random access memory (RAM) suitable for storing at least 192 samples of eight bit PCM from input bus 15. The addressing, reading and writing of buffer 11 are well known and will not be described in any detail so as not to obfuscate the description of the present invention. Buffer 11 is, for example, comprised of three model 4632-550 RAMs.

In the embodiment being described, buffer 11 can store enough data for 32 channels (i.e. 192 x 32 samples) but the operation of only one channel will be described to simplify the description. Note that signals are written into buffer 11 every 3.9 microseconds and retrieved from buffer 11 every 195 nanoseconds. Note also that clock A (Figure 2) has a period of approximately 97 nanoseconds, clock B (Figure 2) has a period of approximately 195 nanoseconds, and clock D (Figure 2) has a period of approximately 390 nanoseconds.

The output of buffer 11 applies an eight bit PCM signal via bus 12 to eight bit latch register 13. The output of register 13 (signal 20a) is separated into the seven magnitude bits (signal 20b) on bus 14 and the sign bit on lead 16. The seven bits on lead 14 along with three bits (signal 51b) on bus 17 and one bit from lead 23 serve to address ROM (read only memory) 18 (e.g. two 82S191). The four bits (signal 51a) from selector 19 are a PCM representation of a reference analogue waveform as will be described in more detail later. The sign

0178082

bit of this signal is applied to exclusive-OR logic gate 21 via lead 22. The use of lead 23 will be described later.

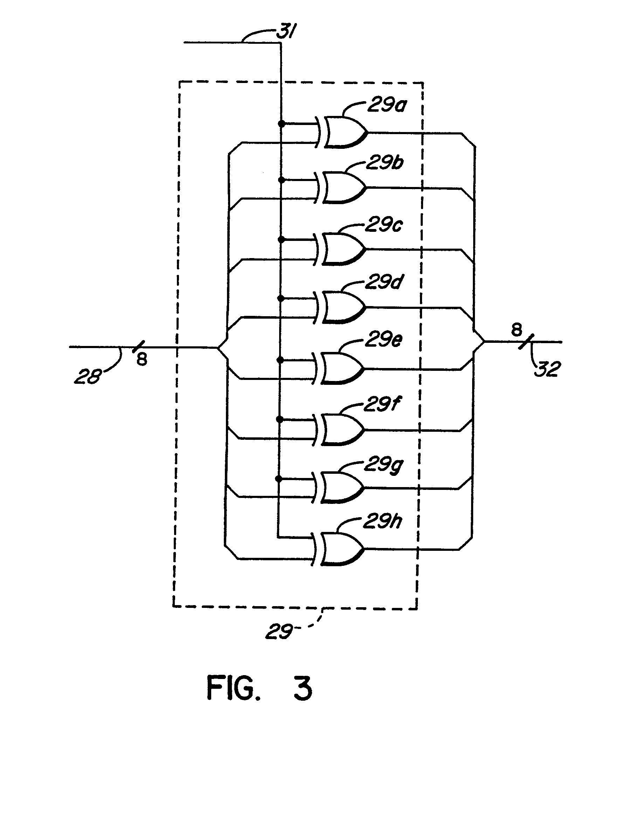

The output of ROM 18 is applied to latch register 26 via bus 27; bus 28 then applied these signals to gate 29. Gate 29 comprises eight exclusive-OR gates 29a to 29h, inclusive, one for each lead of bus 28. The second input for each gate 29a to 29h is lead 31 from exclusive-OR gate 21. This is depicted in more detail in Figure 3. Bus 32, containing data output from gate 29, is combined with bus 33 (eight lines, each carrying the same logic state as lead 31) to form bus 34 which is applied to input A of adder 36 (note: bus 32 and bus 33 are combined such that the bits of bus 33 form the most significant bits). Adder 36 is comprised of four Texas Instrument model 74LS283 devices.

The output Z of adder 36 is applied, via bus 37, to the series connection of registers 38 and 39 as depicted (each register 38 and 39 is comprised of two 74LS273 devices). The output of register 39, on bus 41, is applied to input B of adder 36.

Output signal 42, on bus 41, is a sixteen bit digital signal related to the signal power at the reference frequency. Note that the contents of registers 38 and 39, at the end of the correlation time period, correspond to the signals X and Y of Figure 1 of the aforementioned U.S. patent to Agnew et al. These signals appear, one after the other, on bus 41. When the correlation is complete, these two signals are applied sequentially to magnitude calculator circuit 45 via bus 41 and the magnitude is calculated. One method of calculating the magnitude is to do it as it was done in the aforementioned patent to Agnew et al, namely to square the two signals, sum the resultant squares, and then take the square root of that result (i.e. $\sqrt{X^2 + Y^2}$).

ROM 43 contains the reference signals referred to earlier. ROM 43, in the exemplary embodiment depicted in Figure 1, is 6K x 8 bits (e.g. a model 2764), partially filled. ROM 43 stores the reference signals in a four bit PCM format (i.e. one sign bit plus three magnitude bits for each sample). This allows for the detection of 32 different tones, with 192 samples stored per tone (note: this scheme provides for both a sine-derived and a cosine-derived sample to be stored for each tone; i.e. each addressed location contains 8 bits, four of which represent the sine-derived sample, and four of which represent the cosine-derived sample). The stored samples are derived from the waveform (sine or cosine) multiplied by the finite impulse response (of a low pass filter). These samples are depicted in Appendix A, along with their addresses.

The samples are read from ROM 43 for a given tone by addressing ROM 43 via address bus 46. Individual values of the reference frequency at different sampling times are selected by address bus 47. In more detail, bus 46 specifies which one frequency (out of 32 possible frequencies) is to be accessed from ROM 43. The signal SNUM on bus 47 then cycles through the binary numbers 0 to 191 (at the same rate as the PCM samples are being read from RAM 11) so as to address a corresponding series of values from ROM 43. In short, the signal on bus 46 selects the frequency of the reference samples and signal SNUM on bus 47 selects the individual samples stored for that frequency.

The output of ROM 43 is applied to eight bit latch register 44 (e.g. 74LS374) via bus 48. The output of register 44 is applied to the inputs A and B of selector 19 (e.g. a 74LS298) via bus 49. Selector 19, under control of lead 51, applies four of the bits on either input A or B to the output C of selector 19. The four bits so applied are either representative of the sine-derived function or the cosine-derived function of the reference tone stored in register 44.

To review the operation of correlator circuit 10, the PCM samples for a given channel are read from RAM 11 into register 13, one PCM sample at a time, for a series of 192 PCM samples. The magnitude portions of these PCM samples, on bus 14, are used as part of the address for ROM 18. The three magnitude bits of reference PCM samples on bus 17 are also used as part of the address for ROM 18. An AGC bit on lead 23 is used as the final bit in the eleven bit addressing scheme for ROM 18.

The three bits on bus 17 are the magnitude portion of alternately the sine-derived function and the cosine-derived function of the reference frequency being read from ROM 43 (i.e. the frequency for whose presence is being tested). These PCM samples on bus 17 are being cycled at twice the rate as are the PCM samples on bus 14. Consequently, each PCM sample from bus 14 is being tested against both the sine-derived function and the cosine-derived function of the reference frequency in an interleaved fashion.

ROM 18 performs the functions normally associated with a correlator in quadrature amplitude detection, but does them in a table look-up fashion. ROM 18 performs the multiple functions of PCM to linear conversion, multiplication, and automatic gain control (AGC). The contents of ROM 18 are given in Appendix B.

The output Z of adder 36 is applied to the series connection of registers 38 and 39. This allows the results accumulated from the cross-correlation of the sample PCM signals and the sine-derived function reference signals to be stored in one register 38 or 39 while the results accumulated from the cross-correlation of the sample PCM signals and the cosine-derived reference signals can be stored in the other register 38 or 39. Registers 38 and 39 are reset to zero before the start of each correlation by a signal on lead 35. This signal is applied once every 192 pulses of the clock C signal. Note that although 192 samples of the signal are passed through correlator 10, only 188 samples are actually operated on. Sample times 189 to 192 inclusive are used to shift the results of registers 38 and 39 to magnitude calculator circuit 45; to zero registers 38 and 39; and to set lead 23.

As stated earlier, signal 42 on bus 41 (after the cross-correlation has been completed) comprises a sixteen bit binary number whose magnitude is related to the presence of, or absence of, that tone. As registers 38 and 39 are successively clocked, signal 42 will be either the result (A) of the cross-correlation with the reference sine-derived signal or the result (B) of the cross-correlation with the reference cosine-derived signal. Magnitude calculator circuit 45 computes a magnitude signal based on the relationship $\sqrt{A^2 + B^2}$. The result of this calculation is a representation of the signal power at the reference frequency. If the signal power is of sufficient magnitude, the frequency is deemed present; if it is not of sufficient magnitude, the frequency is deemed not present.

Correlator 10 is designed to operate on each incoming channel ten times in sequence. The first time is used to detect total signal power. If the signal power is below a certain threshold after the first pass, an AGC line (lead 23) is activated (applies a logic 1 signal) to cause the correlator to raise the signal level to a higher level to be more convenient for the following operations (this is implemented of

8

0178082

course by altering the addressing of ROM 18).

The second pass through correlator 10 computes a signal related to the signal power in the range of 150 Hz to 600 Hz. This data is used by other circuitry (not shown) to aid in determining if speech is present or not. The third through tenth passes are used to detect the presence of absence of eight tones (one tone per pass).

0178082

| Address | | | | | Contents of ROM 43 | | | | | | | | | | | |
|---------|----|----|----|----|----|----|----|----|----|----|----|----|----|----|----|----|
| 0000 | 60 | 53 | 36 | 86 | C5 | E3 | E9 | DC | AE | 1E | 5D | 6A | 62 | 45 | 17 | A6 |
| 0010 | D4 | F1 | EB | CE | 8F | 3E | 6B | 70 | 64 | 36 | 97 | C5 | E3 | F9 | DD | AF |
| 0020 | 2F | 5D | 7A | 72 | 55 | 17 | B7 | E4 | F1 | EB | CE | 8F | 4E | 6B | 70 | 64 |
| 0030 | 36 | 97 | C6 | F2 | F9 | DD | AF | 2F | 5D | 7A | 72 | 56 | 17 | B7 | E4 | F1 |
| 0040 | EB | CE | 0F | 4E | 7B | 71 | 64 | 37 | 97 | D6 | F2 | FA | DD | AF | 2F | 5D |
| 0050 | 79 | 73 | 56 | 17 | B7 | E4 | F0 | EC | CE | 0F | 4E | 7B | 71 | 64 | 37 | 97 |
| 0060 | D6 | F2 | FA | DD | AF | 2F | 6D | 79 | 73 | 46 | 17 | B7 | E4 | F0 | EC | CE |
| 0070 | 0F | 4E | 7B | 71 | 65 | 37 | 97 | D5 | F2 | FA | DD | AF | 2F | 6D | 79 | 73 |
| 0080 | 46 | 07 | B6 | E4 | F8 | EC | BE | 1F | 4E | 7B | 71 | 65 | 27 | A7 | D5 | F2 |
| 0090 | FA | DD | 9F | 3F | 6C | 79 | 63 | 46 | 07 | B6 | E3 | F8 | EC | BE | 1F | 4E |
| 00A0 | 6B | 71 | 55 | 27 | A7 | D5 | F2 | EA | CD | 9F | 3E | 5C | 79 | 63 | 46 | 07 |
| 00B0 | B6 | E3 | F8 | DC | BE | 1E | 4D | 6A | 61 | 54 | 26 | A6 | D4 | E1 | EA | CD |
| 00C0 | 61 | 61 | 61 | 61 | 61 | 61 | 61 | 61 | 61 | 61 | 61 | 61 | 61 | 61 | 61 | 61 |
| 00D0 | 61 | 61 | 61 | 61 | 61 | 61 | 61 | 61 | 61 | 61 | 61 | 61 | 61 | 61 | 61 | 61 |
| 00E0 | 61 | 61 | 61 | 61 | 61 | 61 | 61 | 61 | 61 | 61 | 61 | 61 | 61 | 61 | 61 | 61 |
| 00F0 | 61 | 61 | 61 | 61 | 61 | 61 | 61 | 61 | 61 | 61 | 61 | 61 | 61 | 61 | 61 | 61 |
| 0100 | 60 | 54 | 26 | A6 | D4 | E1 | EB | BE | 1E | 4D | 6A | 62 | 45 | 87 | C5 | E2 |
| 0110 | EA | CD | 9F | 3E | 6B | 71 | 55 | 27 | B6 | E4 | F8 | EC | AE | 2F | 5C | 79 |
| 0120 | 63 | 36 | 97 | D5 | F2 | EB | CE | 0F | 4E | 7A | 72 | 55 | 17 | B6 | E3 | F9 |
| 0130 | DD | AF | 3F | 6C | 70 | 64 | 27 | A7 | E5 | F1 | EC | BF | 1F | 5D | 79 | 73 |
| 0140 | 46 | 87 | C6 | F2 | FA | DE | 9F | 4E | 7B | 71 | 55 | 17 | B7 | E4 | F8 | EC |
| 0150 | AF | 2F | 6D | 79 | 64 | 37 | 97 | D5 | F1 | FB | CE | 0F | 5E | 7A | 72 | 56 |
| 0160 | 07 | C6 | F3 | F9 | DD | 9F | 3F | 6C | 70 | 65 | 27 | A7 | E5 | F0 | EC | BF |
| 0170 | 1F | 5D | 79 | 73 | 46 | 97 | D6 | F2 | FA | CE | 8F | 4E | 7B | 71 | 55 | 17 |
| 0180 | B7 | E4 | F9 | ED | AF | 2F | 6C | 78 | 64 | 37 | 97 | D5 | F1 | EB | CE | 1F |
| 0190 | 5D | 7A | 72 | 46 | 07 | C6 | F3 | F9 | DD | 9F | 3E | 6B | 71 | 54 | 27 | A7 |
| 01A0 | E4 | F0 | EC | BE | 1F | 5D | 79 | 63 | 36 | 97 | C5 | F2 | EA | CD | 8F | 4E |
| 01B0 | 6A | 61 | 45 | 17 | B6 | E3 | E9 | DC | AE | 2E | 5C | 68 | 54 | 26 | 96 | D4 |
| 01C0 | 61 | 61 | 61 | 61 | 61 | 61 | 61 | 61 | 61 | 61 | 61 | 61 | 61 | 61 | 61 | 61 |
| 01D0 | 61 | 61 | 61 | 61 | 61 | 61 | 61 | 61 | 61 | 61 | 61 | 61 | 61 | 61 | 61 | 61 |
| 01E0 | 61 | 61 | 61 | 61 | 61 | 61 | 61 | 61 | 61 | 61 | 61 | 61 | 61 | 61 | 61 | 61 |
| 01F0 | 61 | 61 | 61 | 61 | 61 | 61 | 61 | 61 | 61 | 61 | 61 | 61 | 61 | 61 | 61 | 61 |
| 0200 | 60 | 54 | 16 | B6 | E3 | E9 | CD | 8E | 4D | 6A | 63 | 36 | 96 | D4 | F0 | DC |
| 0210 | AE | 2E | 6B | 71 | 55 | 17 | C6 | E2 | EA | CE | 1F | 5D | 79 | 64 | 26 | A7 |
| 0220 | E4 | F9 | DD | 9F | 4E | 7B | 72 | 46 | 87 | D5 | F1 | EB | BF | 2F | 6C | 70 |
| 0230 | 55 | 17 | B6 | F3 | FA | CE | 0F | 5E | 7A | 73 | 36 | A7 | E5 | F0 | EC | AF |
| 0240 | 3F | 6B | 71 | 55 | 07 | C6 | F2 | FB | CE | 1F | 5D | 79 | 64 | 27 | B7 | E4 |
| 0250 | F9 | DD | 9F | 4E | 7A | 72 | 46 | 97 | D5 | F1 | EC | BF | 2F | 6C | 71 | 55 |
| 0260 | 17 | C6 | F3 | FA | CE | 0F | 5E | 79 | 73 | 37 | A7 | E5 | F8 | ED | AF | 3F |
| 0270 | 7B | 72 | 56 | 07 | C6 | F2 | FB | BF | 1F | 6D | 78 | 64 | 27 | B7 | E4 | F9 |
| 0280 | DD | 9F | 4E | 7A | 73 | 46 | 97 | D5 | F1 | EC | AF | 2F | 6C | 71 | 55 | 17 |
| 0290 | C6 | F3 | FA | CE | 1F | 5D | 79 | 63 | 37 | A7 | E4 | F8 | DD | 9F | 3E | 6B |
| 02A0 | 72 | 45 | 87 | C5 | F1 | EB | BE | 2F | 5C | 78 | 54 | 27 | B6 | E3 | F9 | CD |
| 02B0 | BF | 4D | 6A | 63 | 36 | 96 | D4 | E0 | DC | AE | 2E | 6B | 61 | 45 | 16 | B5 |
| 02C0 | 61 | 61 | 61 | 61 | 61 | 61 | 61 | 61 | 61 | 61 | 61 | 61 | 61 | 61 | 61 | 61 |
| 02D0 | 61 | 61 | 61 | 61 | 61 | 61 | 61 | 61 | 61 | 61 | 61 | 61 | 61 | 61 | 61 | 61 |
| 02E0 | 61 | 61 | 61 | 61 | 61 | 61 | 61 | 61 | 61 | 61 | 61 | 61 | 61 | 61 | 61 | 61 |
| 02F0 | 61 | 61 | 61 | 61 | 61 | 61 | 61 | 61 | 61 | 61 | 61 | 61 | 61 | 61 | 61 | 61 |
| 0300 | 50 | 44 | 15 | B4 | D1 | DB | AD | 2D | 5A | 52 | 35 | A6 | D3 | E9 | CD | 1E |
| 0310 | 4C | 68 | 44 | 16 | C5 | E1 | DB | AE | 3E | 6A | 62 | 36 | A6 | D3 | E9 | CD |
| 0320 | 1E | 5C | 78 | 54 | 17 | C5 | F1 | EB | AE | 3E | 6A | 62 | 36 | A7 | E4 | F9 |
| 0330 | CD | 1F | 5D | 78 | 55 | 17 | C6 | F1 | EC | AF | 3E | 7B | 73 | 36 | A7 | E4 |
| 0340 | F9 | CE | 1F | 5D | 78 | 55 | 17 | C6 | F1 | EC | AF | 3F | 7B | 73 | 37 | A7 |
| 0350 | E4 | F9 | DE | 1F | 5D | 78 | 65 | 17 | C6 | F1 | EC | AF | 3F | 7B | 73 | 37 |
| 0360 | A7 | E4 | F9 | DE | 1F | 5D | 78 | 65 | 17 | C6 | F1 | EC | AF | 3F | 7B | 73 |

```
0370   37 A7 E4 F9 DE 1F 5D 78 55 17 C6 F1 EC AF 3F 7B
0380   72 36 A7 E4 F9 CE 1F 5D 78 55 17 C6 F1 EC AF 3E
0390   6B 62 36 A7 E4 F9 CD 0F 5D 78 54 17 C5 E1 EB AE
03A0   3E 6A 62 36 A6 D3 E9 CD 0E 4C 68 54 16 C5 E1 DB
03B0   AE 2D 5A 52 35 96 D3 E9 BC 0E 4C 58 44 15 B4 D1
03C0   61 61 61 61 61 61 61 61 61 61 61 61 61 61 61 61
03D0   61 61 61 61 61 61 61 61 61 61 61 61 61 61 61 61
03E0   61 61 61 61 61 61 61 61 61 61 61 61 61 61 61 61
03F0   61 61 61 61 61 61 61 61 61 61 61 61 61 61 61 61
0400   50 34 A5 D2 CB 0E 5B 52 15 C4 E8 BD 2D 69 44 96
0410   D3 DB 9E 4C 61 35 B6 E1 CC 1E 6B 63 16 D4 E9 BE
0420   3E 79 45 A6 E2 EC 8F 5C 62 26 C6 F0 CE 2F 7A 64
0430   87 E4 FA AF 4D 70 46 B7 F2 DD 1F 6C 73 17 D5 F9
0440   BE 3E 79 55 97 F3 EB 9F 5D 71 37 C6 F1 DE 2F 7B
0450   64 07 E5 FA BF 4E 78 46 A7 F2 EC 0F 6C 73 27 D6
0460   F8 CE 3F 7A 65 97 E4 FB AF 5E 71 47 B7 F1 DD 1F
0470   7B 73 17 D5 F9 BF 4E 79 56 A7 F3 EC 8F 6D 72 37
0480   C6 F0 CE 2F 7A 64 87 E4 FA AF 4E 70 46 B6 F2 DC
0490   1F 6C 63 17 D5 F9 BE 3E 79 55 97 E3 EB 9E 5D 61
04A0   36 B6 E1 CD 1E 6A 53 06 D4 EA AE 3D 68 45 A6 E2
04B0   DB 8E 5B 62 26 B5 E8 BD 2D 59 44 86 D3 DA 9D 4C
04C0   61 61 61 61 61 61 61 61 61 61 61 61 61 61 61 61
04D0   61 61 61 61 61 61 61 61 61 61 61 61 61 61 61 61
04E0   61 61 61 61 61 61 61 61 61 61 61 61 61 61 61 61
04F0   61 61 61 61 61 61 61 61 61 61 61 61 61 61 61 61
0500   50 35 B5 E8 BD 3D 60 35 B5 E8 BD 3D 60 35 B5 E8
0510   BD 3D 60 35 B5 E8 BE 3D 60 36 B5 E8 BE 4D 60 36
0520   C5 F8 BE 4D 71 36 C6 F9 BE 4E 71 36 C6 F9 BE 4E
0530   71 36 C6 F9 BE 4E 71 37 C6 F9 BF 4E 71 37 C6 F9
0540   BF 4E 71 37 D6 F9 BF 5E 71 37 D6 F9 BF 5E 71 37
0550   D6 F9 BF 5E 71 37 D6 F9 BF 5E 71 27 D6 F9 AF 5E
0560   72 27 D6 FA AF 5E 72 27 D6 FA AF 5E 72 27 D5 FA
0570   AF 5D 72 27 D5 FA AF 5D 72 27 D5 FA AF 5D 72 27
0580   D5 FA AF 5D 72 27 D5 FA AF 5D 72 27 D5 FA AF 5D
0590   72 27 D5 FA 9F 5D 62 17 D5 EA 9F 5C 62 16 D4 EA
05A0   9E 5C 62 16 D4 EA 9E 5C 62 16 D4 EA 9E 5C 62 16
05B0   D4 EA 9E 5C 52 16 D4 DA 9E 4B 52 16 C3 DA 9D 4B
05C0   61 61 61 61 61 61 61 61 61 61 61 61 61 61 61 61
05D0   61 61 61 61 61 61 61 61 61 61 61 61 61 61 61 61
05E0   61 61 61 61 61 61 61 61 61 61 61 61 61 61 61 61
05F0   61 61 61 61 61 61 61 61 61 61 61 61 61 61 61 61
0600   50 25 C4 DA 8E 5B 44 A6 E1 BD 3D 61 16 D4 DB 1E
0610   6A 45 B6 E8 AE 4C 62 06 E3 DC 2E 69 36 C5 EA 9E
0620   6C 64 97 F2 CD 3E 71 26 D5 EB 0F 6B 55 A7 F0 BE
0630   5D 72 17 E4 EC 2F 79 46 C6 F9 AF 6D 63 97 F2 DD
0640   3F 70 37 D5 FA 9F 7B 65 A7 F1 CE 4E 71 27 E4 EC
0650   1F 7A 56 B7 F8 BF 5D 73 07 F3 ED 2F 79 47 D6 FA
0660   9F 6C 64 97 F2 DE 4F 71 27 E5 FB 0F 7B 55 B7 F0
0670   BF 5E 72 17 F4 EC 2F 79 46 C6 F9 AF 6D 73 97 F2
0680   DD 3F 70 37 D5 FA 8F 6B 65 A7 F1 CE 4E 71 17 E4
0690   EC 1F 7A 45 B6 F8 AE 5D 63 07 E3 DD 2E 79 36 C5
06A0   EA 9E 5C 54 96 E1 CD 3E 61 26 D4 EB 0E 6A 44 A6
06B0   E0 BD 4D 62 16 D3 DB 1E 69 35 B5 E9 9D 4B 53 85
06C0   61 61 61 61 61 61 61 61 61 61 61 61 61 61 61 61
06D0   61 61 61 61 61 61 61 61 61 61 61 61 61 61 61 61
```

```
0A50   78 56 97 E4 FA BF 3F 7A 64 17 D5 F9 CE 2F 7B 73
0A60   27 C6 F1 ED 8F 6D 71 46 A7 F3 FB AF 4E 79 55 97
0A70   E4 FA BF 3F 7A 64 17 D6 F0 DE 1F 6C 72 37 B6 F2
0A80   EC 9F 5D 71 46 A7 E3 FB AF 4E 79 55 07 D5 F9 CE
0A90   2F 6B 63 27 C6 F1 DD 1F 5C 72 36 B6 E2 EB 9E 4D
0AA0   68 45 96 D3 EA AE 3E 69 54 06 C4 E8 CD 1E 5B 62
0AB0   26 B5 E1 CC 8E 4C 61 35 A5 D2 DB 9D 3C 58 44 85
0AC0   61 61 61 61 61 61 61 61 61 61 61 61 61 61 61 61
0AD0   61 61 61 61 61 61 61 61 61 61 61 61 61 61 61 61
0AE0   61 61 61 61 61 61 61 61 61 61 61 61 61 61 61 61
0AF0   61 61 61 61 61 61 61 61 61 61 61 61 61 61 61 61
0B00   50 35 A5 D0 BC 2D 69 44 A5 E1 CC 1E 6A 44 96 D2
0B10   DC 0E 5B 53 06 D3 EB 8E 5C 62 16 D4 EA 9E 5D 62
0B20   26 C5 E9 BE 4D 71 36 B6 F0 CE 3E 79 46 B6 F1 CD
0B30   2F 7A 55 A7 F2 DD 1F 7B 64 97 E3 EC 8F 6C 63 17
0B40   E4 FB 9F 6D 72 27 D5 FA AF 5E 71 37 C6 F9 BF 4E
0B50   78 46 B7 F1 CE 3F 79 56 A7 F2 DD 2F 7A 65 97 F3
0B60   EC 1F 7B 64 07 E4 FB 9F 6C 73 17 E5 FA AF 5D 72
0B70   27 D6 F9 BF 4E 71 37 C6 F0 CE 3F 79 46 B7 F1 DD
0B80   2F 7A 55 A7 F2 DD 1F 7B 64 97 E3 EC 8F 6C 63 17
0B90   E4 EB 9F 5C 62 27 D5 FA AE 4D 71 36 C5 F9 BE 3E
0BA0   68 35 B6 E1 CD 2E 69 45 A6 E1 CC 1E 6A 54 96 E2
0BB0   DB 0E 5B 53 06 D3 DB 8E 5B 52 15 C4 DA 9D 4C 51
0BC0   61 61 61 61 61 61 61 61 61 61 61 61 61 61 61 61
0BD0   61 61 61 61 61 61 61 61 61 61 61 61 61 61 61 61
0BE0   61 61 61 61 61 61 61 61 61 61 61 61 61 61 61 61
0BF0   61 61 61 61 61 61 61 61 61 61 61 61 61 61 61 61
0C00   50 25 C4 DA 8E 5A 44 A5 E0 AD 4C 52 06 D2 CC 2E
0C10   68 26 C4 EA 8E 6A 44 A6 E0 AE 5D 62 06 E2 DD 2E
0C20   78 36 D5 EB 8F 6B 55 B6 F0 BE 5D 63 07 E3 DD 3E
0C30   78 36 D5 FB 8F 7B 55 B7 F0 BF 5D 73 07 F3 DD 3F
0C40   78 37 D5 FB 8F 7B 55 B7 F0 BF 5D 73 07 F3 DD 3F
0C50   78 37 D5 FB 8F 7B 55 B7 F0 BF 5D 73 07 F3 DD 3F
0C60   78 37 D5 FB 8F 7B 55 B7 F0 BF 5D 73 07 F3 DD 3F
0C70   78 37 D5 FB 8F 7B 55 B7 F0 BF 5D 73 07 F3 DD 3F
0C80   78 37 D5 FB 8F 7B 55 B7 F0 BF 5D 73 07 E3 DD 3E
0C90   78 36 D5 EB 8F 6B 55 B6 F0 BE 5D 63 07 E3 DD 3E
0CA0   78 26 D5 EA 8E 6A 44 A6 E0 AE 4C 62 06 E2 CC 2E
0CB0   68 25 C4 DA 8E 5A 44 A5 E0 AD 4C 52 06 D2 CC 2D
0CC0   61 61 61 61 61 61 61 61 61 61 61 61 61 61 61 61
0CD0   61 61 61 61 61 61 61 61 61 61 61 61 61 61 61 61
0CE0   61 61 61 61 61 61 61 61 61 61 61 61 61 61 61 61
0CF0   61 61 61 61 61 61 61 61 61 61 61 61 61 61 61 61
0D00   50 15 D3 CC 3D 52 96 E0 AD 5B 44 B5 EA 0E 69 26
0D10   D4 DC 3D 61 06 E1 BE 5C 54 A6 E9 9E 6A 36 D5 EB
0D20   2E 71 17 E3 CD 4D 63 A7 F0 AF 6B 45 C6 EB 1F 79
0D30   27 E4 DD 4E 72 97 F1 BF 6C 55 B6 FA 8F 7A 37 E5
0D40   EC 3F 71 17 F2 CE 5D 64 A7 F9 9F 7B 46 D6 FB 2F
0D50   78 27 F3 DE 4E 73 97 F1 AF 6C 55 C6 FA 1F 79 37
0D60   E4 ED 3F 72 07 F2 BF 6D 64 B7 F9 9F 7A 46 D5 EC
0D70   2F 71 17 F3 CE 5E 73 A7 F0 AF 7B 56 C6 FB 1F 79
0D80   27 E4 DD 4E 72 97 F1 BF 6C 55 B6 FA 8F 7A 36 D5
0D90   EC 3E 71 17 F2 CE 5D 64 A6 F9 9F 6B 45 C5 EB 2E
0DA0   78 26 E3 CD 4D 62 96 E0 AE 5B 44 B5 EA 0E 69 26
0DB0   D4 DC 3D 61 06 E1 BD 4C 53 A5 E9 8E 5A 35 C4 DB
```

```
06E0    61 61 61 61 61 61 61 61 61 61 61 61 61 61 61 61
06F0    61 61 61 61 61 61 61 61 61 61 61 61 61 61 61 61
0700    50 25 D3 CC 2D 61 16 D2 CC 3D 62 06 E2 BD 4D 62
0710    96 E1 BD 4C 53 96 E0 AE 5C 54 A6 E8 9E 6B 55 B6
0720    E9 9F 6A 45 C5 EA 0F 7A 36 D5 EB 1F 79 36 D4 EC
0730    2F 70 27 E4 DD 3F 71 17 F3 DD 4E 72 07 F2 CE 5E
0740    73 97 F1 BF 5D 64 A7 F0 AF 6C 65 B7 F9 AF 7C 55
0750    C7 FA 9F 7B 56 C6 FB 0F 7A 47 D6 FB 1F 79 37 E5
0760    EC 2F 70 27 E4 ED 3F 71 17 F3 DE 4E 72 07 F2 CE
0770    5E 73 97 F1 BF 6D 64 A7 F0 AF 6C 65 B7 F9 9F 7B
0780    55 C6 FA 8F 7A 46 C6 FB 0F 7A 36 D5 EB 1F 79 37
0790    E4 EC 2F 70 27 E4 DD 3E 71 17 E3 CD 4E 62 87 E2
07A0    CE 4D 63 96 E1 BE 5C 53 A6 E0 AE 5B 54 A6 E9 9E
07B0    5B 44 B5 E9 8E 6A 35 C5 DA 0E 69 35 C4 DB 1D 58
07C0    61 61 61 61 61 61 61 61 61 61 61 61 61 61 61 61
07D0    61 61 61 61 61 61 61 61 61 61 61 61 61 61 61 61
07E0    61 61 61 61 61 61 61 61 61 61 61 61 61 61 61 61
07F0    61 61 61 61 61 61 61 61 61 61 61 61 61 61 61 61
0800    60 53 35 86 C5 E2 E9 DC AE 1E 4C 69 62 45 16 A6
0810    D4 E0 EB BD 8E 3D 6B 61 54 26 96 C5 E2 EA DD AE
0820    2E 5C 79 63 45 17 B6 E4 F0 EC BE 1F 4E 6B 71 55
0830    27 A7 D5 F2 FA DD 9F 3F 6C 79 63 46 07 C6 E3 F9
0840    EC BF 1F 5E 7A 72 55 27 A7 E5 F1 FB CE 9F 3F 6C
0850    78 64 37 97 C6 F3 F9 ED AF 2F 5D 7A 72 56 17 B7
0860    E4 F1 FB CE 8F 4E 7B 71 64 37 97 D6 F2 FA DD AF
0870    2F 6D 79 73 46 17 B7 E4 F0 EC BE 1F 4E 7B 71 55
0880    27 A7 D5 F2 FA DD 9F 3F 6C 79 63 46 07 C6 E3 F9
0890    EC BE 1F 5D 7A 72 55 27 A7 D4 F1 EB CD 9F 3E 6B
08A0    78 63 36 97 C5 E3 E9 DC AE 2E 5D 69 62 45 16 A6
08B0    D4 E0 EB BD 8E 3D 5B 60 54 26 96 C5 E2 E9 CC 9E
08C0    61 61 61 61 61 61 61 61 61 61 61 61 61 61 61 61
08D0    61 61 61 61 61 61 61 61 61 61 61 61 61 61 61 61
08E0    61 61 61 61 61 61 61 61 61 61 61 61 61 61 61 61
08F0    61 61 61 61 61 61 61 61 61 61 61 61 61 61 61 61
0900    50 43 15 B5 D2 DA BD 1D 5B 60 44 06 B5 E1 DB AD
0910    2E 5B 61 45 06 C5 E1 DB AE 2E 6B 61 45 86 D5 E1
0920    DC AE 3E 6A 62 36 97 D4 F0 DC 9F 4E 6A 63 36 A7
0930    E4 F9 DD 9F 4E 7A 63 36 A7 E4 F9 DD 8F 5D 79 64
0940    27 B7 E3 FA CE 1F 5D 79 64 27 B6 F3 FA CE 1F 6D
0950    78 65 17 C6 F2 FB BF 2F 6C 71 55 17 C6 F2 FB BF
0960    2F 6C 71 56 07 D6 F1 EC AF 3F 7B 72 46 97 D5 F1
0970    EC AF 3F 7B 72 46 97 E5 F0 ED 9F 4E 7A 73 36 A7
0980    E4 F9 DD 9F 4E 7A 63 36 A7 E4 F9 DD 8F 4D 79 64
0990    26 B6 E3 FA CD 1F 5D 79 54 26 B6 E3 EA BE 1E 5C
09A0    68 54 16 B5 E2 EA BE 1E 5C 60 44 06 C5 E1 DB AD
09B0    2E 5B 61 44 06 C4 E1 DB AD 2D 5A 51 34 85 C4 D0
09C0    61 61 61 61 61 61 61 61 61 61 61 61 61 61 61 61
09D0    61 61 61 61 61 61 61 61 61 61 61 61 61 61 61 61
09E0    61 61 61 61 61 61 61 61 61 61 61 61 61 61 61 61
09F0    61 61 61 61 61 61 61 61 61 61 61 61 61 61 61 61
0A00    50 44 95 D3 DA AD 3D 69 53 06 C4 E8 BD 1E 5B 62
0A10    26 B5 E1 DC 8E 5C 61 35 A6 E2 EB 9E 4D 69 55 96
0A20    D4 EA BE 3E 6A 63 17 C5 F0 CD 1F 6C 72 36 B6 F2
0A30    EC 9F 5D 71 46 A7 E3 FB AF 4E 79 55 07 D5 F9 CE
0A40    2F 7B 73 27 C6 F1 DD 1F 6C 72 37 B7 F2 EC 9F 5E
```

```
ODC0    61 61 61 61 61 61 61 61 61 61 61 61 61 61 61 61
ODD0    61 61 61 61 61 61 61 61 61 61 61 61 61 61 61 61
ODE0    61 61 61 61 61 61 61 61 61 61 61 61 61 61 61 61
ODF0    61 61 61 61 61 61 61 61 61 61 61 61 61 61 61 61
OE00    60 35 B5 E9 AE 4D 61 26 C4 EA 9E 5C 63 06 D3 DB
OE10    0E 6B 54 96 E2 DC 2E 69 45 A6 E1 CD 3E 60 36 C5
OE20    E9 AE 4D 62 26 D4 EA 9F 5C 63 07 E3 EC 1F 6B 54
OE30    97 E2 DD 2E 79 45 B6 F1 CE 3E 70 36 C6 F9 AE 5D
OE40    72 27 D5 EA 9F 6C 63 07 E3 EC 1F 6B 54 97 F2 DD
OE50    2F 79 46 B6 F0 CE 4E 70 36 C6 F9 AF 5D 72 27 D5
OE60    FB 9F 6C 63 07 E3 EC 1F 6B 55 A7 F2 DD 2F 79 46
OE70    B6 F0 CE 4E 70 36 C5 F9 AF 5D 72 17 D4 EB 9F 6C
OE80    63 87 E3 EC 1F 6A 55 A7 F2 DD 2E 79 45 B6 F0 BE
OE90    4E 71 36 C5 F9 AE 5D 62 17 D4 EB 9F 6C 63 87 E3
OEA0    DC 1E 6A 54 A6 E2 CD 2E 69 45 B6 E0 BE 3D 61 26
OEB0    C5 E9 AE 4C 62 16 D4 EB 8E 5B 53 86 D3 DC 1E 6A
OEC0    61 61 61 61 61 61 61 61 61 61 61 61 61 61 61 61
OED0    61 61 61 61 61 61 61 61 61 61 61 61 61 61 61 61
OEE0    61 61 61 61 61 61 61 61 61 61 61 61 61 61 61 61
OEF0    61 61 61 61 61 61 61 61 61 61 61 61 61 61 61 61
OF00    60 26 C4 EA 8E 6A 44 A6 E0 AE 4C 62 06 E2 CC 2E
OF10    68 26 C4 EA 8E 6A 55 A6 E0 AE 5D 62 06 E2 DD 2E
OF20    78 36 D5 EB 8F 6B 55 B6 F0 BE 5D 63 07 E3 DD 3E
OF30    78 36 D5 EB 8F 6B 55 B6 F0 BE 5D 63 07 E3 DD 3E
OF40    78 36 D5 EB 8F 6B 55 B6 F0 BE 5D 63 07 E3 DD 3E
OF50    78 36 D5 EB 8F 6B 55 B6 F0 BE 5D 63 07 E3 DD 3E
OF60    78 36 D5 EB 8F 6B 55 B6 F0 BE 5D 63 07 E3 DD 3E
OF70    78 36 D5 EB 8F 6B 55 B6 F0 BE 5D 63 07 E3 DD 3E
OF80    78 36 D5 EB 8F 6B 55 B6 F0 BE 5D 63 07 E3 DD 3E
OF90    78 36 D5 EB 8F 6B 55 B6 F0 BE 5D 63 07 E3 DD 3E
OFA0    78 26 D5 EA 8E 6A 55 A6 E0 AE 5D 62 06 E2 CC 2E
OFB0    68 26 C4 EA 8E 6A 44 A6 E0 AE 4C 62 06 E2 CC 2E
OFC0    61 61 61 61 61 61 61 61 61 61 61 61 61 61 61 61
OFD0    61 61 61 61 61 61 61 61 61 61 61 61 61 61 61 61
OFE0    61 61 61 61 61 61 61 61 61 61 61 61 61 61 61 61
OFF0    61 61 61 61 61 61 61 61 61 61 61 61 61 61 61 61
1000    60 26 D3 DC 2E 60 16 D3 CC 3E 61 16 E3 CD 3D 61
1010    06 E2 CD 4D 62 86 E2 CD 4D 62 96 E1 BE 5D 63 96
1020    E1 BE 5C 63 A6 F0 AE 5C 54 A6 F8 AE 6C 54 B6 F9
1030    9F 6B 55 B6 F9 9F 6B 45 C6 FA 8F 6A 46 C5 EA 0F
1040    7A 46 D5 EB 1F 79 36 D5 EB 1F 79 36 D4 EC 2F 78
1050    27 E4 EC 2F 70 27 E4 DD 3E 71 17 E3 DD 3E 72 17
1060    F3 CD 4E 72 07 F2 CE 4D 73 97 F2 BE 5D 63 97 F1
1070    BE 5D 64 A7 F0 AE 5C 64 A7 F8 AF 6C 54 B6 F9 9F
1080    6B 55 B6 F9 9F 6B 55 C6 FA 8F 6A 45 C5 EA 0F 7A
1090    46 C5 EB 1F 79 36 D5 EB 1F 79 36 D4 EC 2E 78 26
10A0    D4 DC 2E 60 26 E3 DC 3E 61 16 E3 CD 3E 61 16 E2
10B0    CD 3D 62 06 E2 CD 4D 62 86 E1 BD 4C 53 96 E1 BD
10C0    61 61 61 61 61 61 61 61 61 61 61 61 61 61 61 61
10D0    61 61 61 61 61 61 61 61 61 61 61 61 61 61 61 61
10E0    61 61 61 61 61 61 61 61 61 61 61 61 61 61 61 61
10F0    61 61 61 61 61 61 61 61 61 61 61 61 61 61 61 61
1100    60 16 E2 BD 4C 53 A6 E9 8E 6A 36 D4 DC 3E 62 86
1110    E1 AE 5B 45 C5 EB 1E 60 16 E2 CD 5D 53 A6 E9 8F
1120    6A 36 D4 DC 3E 62 97 F1 AE 6B 45 C5 EB 2F 70 17
```

```
1130   E2 CE 5D 64 A6 F9 8F 7A 36 D4 DD 3E 72 97 F1 AF
1140   6B 45 C5 EB 2F 70 17 E2 CE 5D 64 B6 F9 8F 7A 36
1150   E4 DD 4E 72 97 F1 AF 6B 45 C5 EB 2F 70 17 F2 CE
1160   5D 64 B6 F9 8F 79 36 E4 DD 4E 72 97 F0 AF 6B 45
1170   C5 EB 2F 71 17 F2 CE 5D 64 B6 FA 0F 79 36 E4 DD
1180   4E 62 97 F0 AF 6B 45 C5 EB 2F 71 17 E2 BE 5C 54
1190   B6 FA 0F 79 26 E4 DD 4E 62 97 F0 AE 6B 45 C5 EB
11A0   2E 61 16 E2 BE 5C 54 B6 EA 0E 69 26 D3 CD 4D 62
11B0   96 E0 9E 6B 45 C5 DB 2E 61 06 E2 BD 5C 54 B5 EA
11C0   61 61 61 61 61 61 61 61 61 61 61 61 61 61 61 61
11D0   61 61 61 61 61 61 61 61 61 61 61 61 61 61 61 61
11E0   61 61 61 61 61 61 61 61 61 61 61 61 61 61 61 61
11F0   61 61 61 61 61 61 61 61 61 61 61 61 61 61 61 61
1200   60 16 E1 AE 5B 35 D4 CC 4D 53 B6 EA 2E 61 86 E0
1210   9E 6A 36 E3 CD 5C 54 C5 EB 2E 62 96 E8 8E 69 26
1220   E2 BE 5C 45 D5 DC 3E 63 A6 F9 1F 78 17 F2 AE 6B
1230   46 D4 DD 4D 64 B6 EA 2F 71 87 F1 9F 7A 36 E3 CD
1240   5D 54 C6 EB 3E 72 97 F8 8F 79 27 E3 BE 6C 55 D5
1250   EC 3E 63 A7 F9 1F 78 17 F2 AF 6B 46 D4 DD 4E 64
1260   B6 FA 2F 71 07 F1 AF 7A 36 E4 CE 5D 54 C6 EB 2F
1270   72 97 F8 9F 79 27 E3 BE 6C 55 D5 EC 3E 63 A7 F9
1280   0F 78 17 F2 BE 6B 46 D4 DD 4D 63 B6 EA 1F 71 07
1290   F1 AF 6A 36 E4 CD 5D 54 C6 EB 2E 62 97 F8 9F 69
12A0   26 E3 BE 5C 45 C5 DC 3E 62 A6 E9 0E 68 16 E2 AE
12B0   5B 45 D4 DC 4D 53 A6 EA 1E 60 06 E1 AE 6A 35 D3
12C0   61 61 61 61 61 61 61 61 61 61 61 61 61 61 61 61
12D0   61 61 61 61 61 61 61 61 61 61 61 61 61 61 61 61
12E0   61 61 61 61 61 61 61 61 61 61 61 61 61 61 61 61
12F0   61 61 61 61 61 61 61 61 61 61 61 61 61 61 61 61
1300   60 06 E0 8E 68 06 E1 9E 69 16 E1 9E 69 16 E1 9E
1310   6A 26 E2 AE 6A 26 E2 AE 6A 26 E3 BE 6B 36 E3 BE
1320   6B 36 E3 BE 6C 46 D4 CD 5C 45 D4 CD 5C 45 D4 DD
1330   5D 55 D5 DD 5D 55 C5 DC 4D 54 C5 DC 4E 64 C6 EC
1340   4E 64 C6 EB 3E 63 B6 EB 3E 63 B6 EB 3E 72 A7 FA
1350   2F 72 A7 FA 2F 72 A7 F9 1F 71 97 F9 1F 71 97 F9
1360   0F 70 87 F8 8F 78 07 F0 8F 79 17 F1 9F 79 17 F1
1370   9F 79 27 F2 AF 7A 27 F2 AF 7A 27 E2 BE 6B 36 E3
1380   BE 6B 36 E3 BE 6B 36 E4 CE 6C 46 E4 CD 5C 45 D4
1390   CD 5C 45 D5 DD 5D 55 D5 DD 4D 54 C5 DC 4D 54 C5
13A0   DC 4D 54 C5 DB 3E 63 B6 EB 3E 63 B6 EB 3E 63 A6
13B0   EA 2E 62 A6 EA 2E 62 A6 EA 1E 61 96 E9 1E 61 96
13C0   61 61 61 61 61 61 61 61 61 61 61 61 61 61 61 61
13D0   61 61 61 61 61 61 61 61 61 61 61 61 61 61 61 61
13E0   61 61 61 61 61 61 61 61 61 61 61 61 61 61 61 61
13F0   61 61 61 61 61 61 61 61 61 61 61 61 61 61 61 61
1400   60 45 96 D3 DB 9E 4D 68 45 96 E3 EB AE 4D 68 45
1410   96 E3 EB AE 4D 68 45 96 E3 EA AE 4D 68 45 96 E3
1420   EA AE 4D 79 55 97 E3 EA AE 4E 79 55 97 E4 EA AE
1430   4E 79 55 97 E4 EA AE 4E 79 55 97 E4 FA AE 3E 79
1440   55 97 E4 FA BE 3E 79 55 87 E4 FA BE 3E 79 55 87
1450   E4 FA BE 3E 79 55 87 E4 FA BE 3E 79 54 87 E4 FA
1460   BE 3E 7A 54 07 D4 FA BE 3E 7A 64 07 D4 F9 BE 3E
1470   7A 64 07 D5 F9 BE 3E 7A 64 07 D5 F9 BE 3E 7A 64
1480   07 D5 F9 BE 3E 7A 64 17 D5 F9 BE 2E 6A 64 17 D5
1490   F9 CE 2E 6A 64 17 D5 F9 CE 2E 6A 63 17 D5 F9 CD
```

```
14A0    2E 6A 63 16 C5 E9 CD 2E 6A 63 16 C5 EB CD 2E 6A
14B0    53 16 C5 E8 CD 2E 6A 53 16 C5 E8 CD 2E 5A 53 16
14C0    61 61 61 61 61 61 61 61 61 61 61 61 61 61 61 61
14D0    61 61 61 61 61 61 61 61 61 61 61 61 61 61 61 61
14E0    61 61 61 61 61 61 61 61 61 61 61 61 61 61 61 61
14F0    61 61 61 61 61 61 61 61 61 61 61 61 61 61 61 61
1500    60 44 86 C4 E8 CD 1E 5C 61 45 96 D4 E9 BD 1E 5B
1510    62 35 A6 E3 EA BE 2E 6B 62 26 B6 E2 EB AE 3E 6A
1520    63 26 B6 E2 EC 9E 4D 79 54 17 C5 F1 DC 9F 4D 78
1530    55 07 D5 F8 DD 0F 5C 71 45 97 D4 F9 CE 1F 6C 71
1540    46 A7 E4 FA BE 2F 6B 72 36 A6 E3 EB BE 3E 7A 63
1550    27 B6 F2 EB AF 4E 7A 64 17 C6 F1 EC 9F 4D 79 55
1560    07 D5 F0 DD 8F 5D 70 55 87 D5 F9 CD 1F 6C 71 46
1570    97 E4 FA CE 2F 6B 72 36 A7 E3 FA BE 3E 6B 63 26
1580    B6 E2 EB AF 3E 7A 63 27 C6 F1 EC 9F 4D 79 54 17
1590    C5 F1 DC 8F 5D 78 55 87 D5 F8 CD 1F 5C 71 45 96
15A0    D4 E9 CD 1E 5B 62 36 A6 E3 EA BE 2E 6B 62 36 A6
15B0    E2 EB AE 3E 6A 53 26 B5 E2 DB 9E 3D 69 53 16 C5
15C0    61 61 61 61 61 61 61 61 61 61 61 61 61 61 61 61
15D0    61 61 61 61 61 61 61 61 61 61 61 61 61 61 61 61
15E0    61 61 61 61 61 61 61 61 61 61 61 61 61 61 61 61
15F0    61 61 61 61 61 61 61 61 61 61 61 61 61 61 61 61
1600    60 54 16 B5 E2 EA BD 1E 5C 60 44 06 C5 E1 EB AE
1610    2E 5B 61 45 06 C5 E1 DB AE 2E 6B 62 45 96 D5 F1
1620    DC AE 3E 6B 62 36 97 D4 F0 DC 9F 3E 6A 63 36 A7
1630    D4 F9 DD 9F 4D 7A 63 36 A6 E4 F9 CD 8F 4D 79 64
1640    27 B6 E3 FA CE 1F 5D 79 64 27 B6 E3 FA CE 1F 5D
1650    78 55 17 C6 F2 EB BE 2F 6C 71 55 17 C6 F2 EB BE
1660    2F 6C 71 55 07 D5 F1 EC AF 3E 6B 72 46 97 D5 F1
1670    EC AF 3E 6B 72 46 97 D5 F0 DC 9F 4E 7A 63 36 A7
1680    E4 F9 DD 9F 4E 7A 63 36 A6 E4 F9 CD 8F 4D 79 64
1690    26 B6 E3 FA CD 1F 5D 79 54 26 B6 E3 EA BE 1E 5C
16A0    78 54 16 B6 E2 EA BE 1E 5C 61 55 06 C5 E1 EB AE
16B0    2E 5B 61 45 06 C5 E1 DB AE 2E 5B 61 45 86 C4 E0
16C0    61 61 61 61 61 61 61 61 61 61 61 61 61 61 61 61
16D0    61 61 61 61 61 61 61 61 61 61 61 61 61 61 61 61
16E0    61 61 61 61 61 61 61 61 61 61 61 61 61 61 61 61
16F0    61 61 61 61 61 61 61 61 61 61 61 61 61 61 61 61
1700    60 53 26 A6 D4 E0 DB BE 1E 4C 69 63 35 96 C5 E1
1710    EA BD 0E 4D 6A 62 45 06 B5 E2 E9 CD 9E 3E 6B 61
1720    54 16 B6 E3 F8 DC AE 2E 5C 78 64 26 A6 D4 F1 EB
1730    BE 1F 5D 79 63 36 97 C5 F2 EA CE 0F 4E 6A 72 45
1740    07 C6 E3 F9 DD 9F 3E 6B 71 55 27 B6 E4 F8 EC AF
1750    2F 6C 78 64 36 A7 D5 F1 EB BE 1F 5D 79 63 46 97
1760    C5 F2 FA CE 8F 4E 7A 72 45 17 C6 E3 F9 DD 9F 3E
1770    6B 71 55 27 B6 E4 F8 EC AF 2F 5C 78 64 36 A7 D5
1780    F1 EB BE 1F 5D 79 63 46 87 C5 F2 EA CD 8F 4E 6A
1790    72 45 17 B6 E3 F9 DD 9F 3E 6B 71 54 26 A6 D4 F8
17A0    DC AE 2E 5C 68 63 36 96 D4 E1 EB BE 1E 4D 69 62
17B0    35 86 C5 E2 EA CD 8E 3D 6A 61 45 16 B5 D3 E9 CC
17C0    61 61 61 61 61 61 61 61 61 61 61 61 61 61 61 61
17D0    61 61 61 61 61 61 61 61 61 61 61 61 61 61 61 61
17E0    61 61 61 61 61 61 61 61 61 61 61 61 61 61 61 61
17F0    61 61 61 61 61 61 61 61 61 61 61 61 61 61 61 61
1800    60 53 35 06 B5 D3 E0 DB BD 8E 3E 5B 68 63 45 06
```

```
1810  B6 D4 E1 EB CD 9E 3E 5C 69 62 45 16 A6 D4 E1 EA
1820  CD 9E 2E 5C 69 62 45 16 A6 D4 F1 EA DD AF 2E 5D
1830  7A 72 55 27 A7 D5 F2 FA DD AF 1F 5D 7A 71 55 27
1840  97 C5 E2 F9 DC AE 1F 4D 6B 71 54 36 97 C6 E3 F9
1850  EC BE 1F 4E 6B 71 64 36 87 C6 E3 F8 EC BE 0F 4E
1860  6B 70 64 36 07 B6 E4 F0 EB CE 8F 3E 6C 78 63 46
1870  07 B6 E4 F1 EB CE 9F 3E 6C 79 63 46 17 B6 D4 F1
1880  EB CD 9F 2E 5C 79 62 45 17 A6 D4 F1 EA DD 9F 2E
1890  5D 7A 62 55 26 A6 D5 E2 EA DD AE 2E 5D 6A 61 54
18A0  26 96 C5 E2 E9 DC AE 1E 4D 6A 61 54 26 96 C5 E2
18B0  E9 DC AE 1E 4D 6B 61 54 36 86 B5 D3 E8 DB BD 0E
18C0  61 61 61 61 61 61 61 61 61 61 61 61 61 61 61 61
18D0  61 61 61 61 61 61 61 61 61 61 61 61 61 61 61 61
18E0  61 61 61 61 61 61 61 61 61 61 61 61 61 61 61 61
18F0  61 61 61 61 61 61 61 61 61 61 61 61 61 61 61 61
1900  60 52 45 26 96 B5 D3 E1 EA DC BE 8E 2E 4C 6A 60
1910  63 45 16 96 C5 E3 E1 EA DC AE 0E 3E 5C 6A 61 54
1920  46 16 A6 C5 E3 F0 EB CD AE 1F 3E 5C 79 72 54 36
1930  07 A6 D5 E2 F8 EB CD AF 1F 4E 6B 79 72 55 36 87
1940  B6 D4 F2 F9 EC CE 9F 2F 4D 6B 78 63 55 27 97 B6
1950  E4 F1 FA EC BE 9F 2F 5D 7B 70 63 45 27 97 C6 E4
1960  F1 FA DD BE 8F 3E 5D 7A 71 64 46 17 A7 C5 E3 F0
1970  EB DD AF 1F 3E 6C 7A 71 64 36 17 A7 D5 E3 F8 EB
1980  CD AF 1F 4E 6C 79 72 54 36 07 B6 D5 E2 F9 EB CE
1990  9F 2F 4D 6B 78 62 55 26 87 B6 D4 E2 E9 DC BE 9F
19A0  2E 4D 6B 60 63 45 26 96 B5 D4 E1 EA DC BE 8E 2E
19B0  5C 6A 61 53 45 16 96 C5 D3 E0 EA CC AE 0E 3D 5C
19C0  61 61 61 61 61 61 61 61 61 61 61 61 61 61 61 61
19D0  61 61 61 61 61 61 61 61 61 61 61 61 61 61 61 61
19E0  61 61 61 61 61 61 61 61 61 61 61 61 61 61 61 61
19F0  61 61 61 61 61 61 61 61 61 61 61 61 61 61 61 61
1A00  30 03 B0 9B 39 13 B2 AB 3A 23 B3 BA 2B 32 A4 CA
1A10  1C 41 94 C8 8C 48 14 C1 9C 4A 24 C2 BC 4B 33 B4
1A20  CB 3C 52 A5 DA 1D 51 85 D0 8D 59 15 D2 AD 5B 35
1A30  D3 CC 4C 54 C5 DB 3D 62 A6 E9 1E 60 06 E0 9E 6A
1A40  26 E2 BE 6B 45 D4 DD 4D 54 C6 EB 3E 62 A7 F9 1F
1A50  78 17 F1 AF 7A 36 E3 CE 6C 55 D5 DD 4E 64 B6 EB
1A60  2F 72 97 F9 8F 79 17 F2 AF 6B 36 E4 CE 5C 55 C5
1A70  EC 4E 63 B6 EA 2F 71 97 F0 9F 79 26 E2 AE 6B 36
1A80  D4 CD 4C 54 C5 DB 3E 62 A6 E9 1E 60 06 E0 9E 69
1A90  26 D2 BD 5B 35 C4 CC 4C 43 B5 DA 2D 52 95 D9 0D
1AA0  58 05 D1 9D 49 24 C2 AC 4B 33 B3 BB 2B 42 A4 CA
1AB0  1C 41 94 C8 8C 48 14 B1 9B 39 23 B2 AB 2A 22 A2
1AC0  61 61 61 61 61 61 61 61 61 61 61 61 61 61 61 61
1AD0  61 61 61 61 61 61 61 61 61 61 61 61 61 61 61 61
1AE0  61 61 61 61 61 61 61 61 61 61 61 61 61 61 61 61
1AF0  61 61 61 61 61 61 61 61 61 61 61 61 61 61 61 61
1B00  20 02 A1 9A 2A 22 92 A9 0B 30 03 B1 9B 2A 22 A3
1B10  B9 1B 30 03 B1 AB 3A 33 A3 C9 1C 40 14 C1 AC 3B
1B20  33 A4 CA 1C 50 15 D1 AC 4B 43 B4 DA 1D 50 15 D1
1B30  AD 4B 44 B5 DA 2E 61 06 E1 AD 5B 44 C5 EB 2E 61
1B40  06 E1 BE 5C 45 C5 EB 2E 71 07 E1 BE 6C 55 C5 EB
1B50  2E 71 07 F1 BE 6C 55 C5 EB 2F 71 07 F1 AF 6C 55
1B60  C5 EB 2F 71 07 F1 AF 6B 45 C5 EC 2E 71 87 F1 AE
1B70  6B 45 C5 EC 2E 71 87 F1 AE 6B 45 C5 DB 2E 61 86
```

```
1BB0   E1 AE 5B 45 C4 DB 2D 61 B6 E1 AE 5A 35 C4 DB 2D
1B90   51 B5 D0 9D 5A 34 C4 CB 2C 51 B5 D0 9C 4A 34 B3
1BA0   BB 2C 41 B4 C0 9C 4A 23 B3 BA 2B 31 B3 B0 9B 39
1BB0   23 A2 AA 1B 31 B3 B0 9B 29 12 A2 A9 1A 21 B2 A0
1BC0   61 61 61 61 61 61 61 61 61 61 61 61 61 61 61 61
1BD0   61 61 61 61 61 61 61 61 61 61 61 61 61 61 61 61
1BE0   61 61 61 61 61 61 61 61 61 61 61 61 61 61 61 61
1BF0   61 61 61 61 61 61 61 61 61 61 61 61 61 61 61 61
1C00   20 B2 A8 0A 20 B2 B8 0B 30 B3 BB 0B 30 B3 BB 0B
1C10   30 B3 BB 1B 31 94 C9 1C 41 94 C9 1C 41 94 C9 1C
1C20   41 94 C9 1C 41 95 D9 1D 52 A5 DA 2D 52 A5 DA 2D
1C30   52 A5 DA 2D 52 A5 DA 2D 53 B5 DB 3D 53 B5 DB 3D
1C40   53 B6 EB 3E 63 B6 EB 3E 64 C6 EC 4E 64 C6 EC 4E
1C50   64 C5 DC 4D 54 C5 DC 4D 54 C5 DD 5D 55 D5 DD 5D
1C60   55 D5 DD 5D 55 D5 DD 5D 55 D5 DD 5D 55 D4 CD 5C
1C70   45 D4 CD 5C 45 D4 CD 5C 45 D4 CD 5C 45 D4 BD 5B
1C80   35 D3 BD 5B 35 D3 BD 5B 35 D3 BD 5B 35 D2 AD 5A
1C90   25 D2 AD 5A 25 D2 AD 5A 25 C2 AC 4A 24 C2 9C 49
1CA0   14 C1 9C 49 14 C1 9C 49 14 C1 9C 39 13 B1 9B 39
1CB0   13 B1 9B 38 03 B0 BB 38 03 A0 8A 28 02 A0 8A 28
1CC0   61 61 61 61 61 61 61 61 61 61 61 61 61 61 61 61
1CD0   61 61 61 61 61 61 61 61 61 61 61 61 61 61 61 61
1CE0   61 61 61 61 61 61 61 61 61 61 61 61 61 61 61 61
1CF0   61 61 61 61 61 61 61 61 61 61 61 61 61 61 61 61
1D00   00 00 80 88 08 00 80 88 08 00 80 88 08 00 80 88
1D10   08 00 80 88 08 00 80 88 08 00 80 89 18 01 90 89
1D20   18 01 90 89 18 01 90 89 18 02 A0 8A 28 02 A0 8A
1D30   28 02 A0 8B 38 03 B0 8B 38 03 B0 8C 48 04 C0 8C
1D40   48 04 D0 8D 58 05 D0 8D 58 05 E0 8E 68 06 E0 8E
1D50   68 06 E0 8E 78 07 F0 8F 78 07 F0 8F 78 07 F0 8F
1D60   78 07 F0 8F 78 07 F0 8F 78 07 F0 8F 68 06 E0 8E
1D70   68 06 E0 8E 68 06 D0 8D 58 05 D0 8D 58 05 C0 8C
1D80   48 04 C0 8C 48 03 B0 8B 38 03 B0 8B 38 02 A0 8A
1D90   28 02 A0 8A 28 02 A0 89 18 01 90 89 18 01 90 89
1DA0   18 01 90 89 18 00 80 88 08 00 80 88 08 00 80 88
1DB0   08 00 80 88 08 00 80 88 08 00 80 88 08 00 80 88
1DC0   61 61 61 61 61 61 61 61 61 61 61 61 61 61 61 61
1DD0   61 61 61 61 61 61 61 61 61 61 61 61 61 61 61 61
1DE0   61 61 61 61 61 61 61 61 61 61 61 61 61 61 61 61
1DF0   61 61 61 61 61 61 61 61 61 61 61 61 61 61 61 61
1E00   00 00 00 00 00 00 00 00 00 00 00 00 00 00 00 00
1E10   00 00 00 00 00 00 00 00 00 00 00 00 00 00 00 00
1E20   00 00 00 00 00 00 00 00 00 00 00 00 00 00 00 00
1E30   00 00 00 00 00 00 00 00 00 00 00 00 00 00 00 00
1E40   00 00 00 00 00 00 00 00 00 00 00 00 00 00 00 00
1E50   00 00 00 00 00 00 00 00 00 00 00 00 00 00 00 00
1E60   00 00 00 00 00 00 00 00 00 00 00 00 00 00 00 00
1E70   00 00 00 00 00 00 00 00 00 00 00 00 00 00 00 00
1E80   00 00 00 00 00 00 00 00 00 00 00 00 00 00 00 00
1E90   00 00 00 00 00 00 00 00 00 00 00 00 00 00 00 00
1EA0   00 00 00 00 00 00 00 00 00 00 00 00 00 00 00 00
1EB0   00 00 00 00 00 00 00 00 00 00 00 00 00 00 00 00
1EC0   61 61 61 61 61 61 61 61 61 61 61 61 61 61 61 61
1ED0   61 61 61 61 61 61 61 61 61 61 61 61 61 61 61 61
1EE0   61 61 61 61 61 61 61 61 61 61 61 61 61 61 61 61
```

| | | | | | | | | | | | | | | | | |
|---|---|---|---|---|---|---|---|---|---|---|---|---|---|---|---|---|
| 1EF0 | 61 | 61 | 61 | 61 | 61 | 61 | 61 | 61 | 61 | 61 | 61 | 61 | 61 | 61 | 61 | 61 |
| 1F00 | 30 | 31 | 32 | 22 | 13 | 13 | 83 | 93 | A3 | B2 | B1 | C0 | C9 | CA | BB | AB |
| 1F10 | 9C | 8C | 1C | 2C | 3B | 4A | 49 | 40 | 41 | 43 | 34 | 24 | 15 | 95 | A5 | B4 |
| 1F20 | C3 | D2 | D0 | D9 | DA | CC | BD | 9D | 8D | 1D | 3D | 4C | 5B | 69 | 60 | 52 |
| 1F30 | 53 | 45 | 25 | 16 | 96 | B5 | C5 | D3 | E2 | E0 | E9 | DB | CC | BE | 9E | 0E |
| 1F40 | 2E | 4D | 5C | 6B | 79 | 71 | 63 | 54 | 45 | 26 | 17 | 97 | B6 | D5 | E4 | F2 |
| 1F50 | F0 | FA | EC | DD | BE | 9F | 1F | 2F | 4E | 5C | 6B | 79 | 71 | 63 | 55 | 46 |
| 1F60 | 27 | 07 | A7 | B6 | D5 | E3 | F2 | F8 | FA | EC | DD | BE | 9F | 1F | 3E | 4D |
| 1F70 | 6C | 6A | 79 | 71 | 63 | 55 | 46 | 26 | 07 | A6 | B6 | D4 | E3 | E1 | E9 | EA |
| 1F80 | DC | CD | AE | 9E | 1E | 3E | 4D | 5B | 6A | 68 | 61 | 53 | 44 | 35 | 16 | 86 |
| 1F90 | A6 | B5 | C4 | D2 | E1 | E9 | DA | CB | BC | AD | 8D | 1D | 2D | 3C | 4B | 59 |
| 1FA0 | 58 | 51 | 43 | 34 | 24 | 15 | 85 | A4 | B4 | B3 | C2 | C1 | C9 | CA | BB | AB |
| 1FB0 | 9C | 8C | 1C | 2B | 3B | 3A | 49 | 40 | 31 | 32 | 23 | 13 | 13 | 83 | 93 | A2 |
| 1FC0 | 61 | 61 | 61 | 61 | 61 | 61 | 61 | 61 | 61 | 61 | 61 | 61 | 61 | 61 | 61 | 61 |
| 1FD0 | 61 | 61 | 61 | 61 | 61 | 61 | 61 | 61 | 61 | 61 | 61 | 61 | 61 | 61 | 61 | 61 |
| 1FE0 | 61 | 61 | 61 | 61 | 61 | 61 | 61 | 61 | 61 | 61 | 61 | 61 | 61 | 61 | 61 | 61 |
| 1FF0 | 61 | 61 | 61 | 61 | 61 | 61 | 61 | 61 | 61 | 61 | 61 | 61 | 61 | 61 | 61 | 61 |
| 2000 | 61 | 61 | 61 | 61 | 61 | 61 | 61 | 61 | 61 | 61 | 61 | 61 | 61 | 61 | 61 | 61 |
| 2010 | 61 | 61 | 61 | 61 | 61 | 61 | 61 | 61 | 61 | 61 | 61 | 61 | 61 | 61 | 61 | 61 |
| 2020 | 61 | 61 | 61 | 61 | 61 | 61 | 61 | 61 | 61 | 61 | 61 | 61 | 61 | 61 | 61 | 61 |
| 2030 | 61 | 61 | 61 | 61 | 61 | 61 | 61 | 61 | 61 | 61 | 61 | 61 | 61 | 61 | 61 | 61 |
| 2040 | 61 | 61 | 61 | 61 | 61 | 61 | 61 | 61 | 61 | 61 | 61 | 61 | 61 | 61 | 61 | 61 |
| 2050 | 61 | 61 | 61 | 61 | 61 | 61 | 61 | 61 | 61 | 61 | 61 | 61 | 61 | 61 | 61 | 61 |
| 2060 | 61 | 61 | 61 | 61 | 61 | 61 | 61 | 61 | 61 | 61 | 61 | 61 | 61 | 61 | 61 | 61 |
| 2070 | 61 | 61 | 61 | 61 | 61 | 61 | 61 | 61 | 61 | 61 | 61 | 61 | 61 | 61 | 61 | 61 |
| 2080 | 61 | 61 | 61 | 61 | 61 | 61 | 61 | 61 | 61 | 61 | 61 | 61 | 61 | 61 | 61 | 61 |
| 2090 | 61 | 61 | 61 | 61 | 61 | 61 | 61 | 61 | 61 | 61 | 61 | 61 | 61 | 61 | 61 | 61 |
| 20A0 | 61 | 61 | 61 | 61 | 61 | 61 | 61 | 61 | 61 | 61 | 61 | 61 | 61 | 61 | 61 | 61 |
| 20B0 | 61 | 61 | 61 | 61 | 61 | 61 | 61 | 61 | 61 | 61 | 61 | 61 | 61 | 61 | 61 | 61 |
| 20C0 | 61 | 61 | 61 | 61 | 61 | 61 | 61 | 61 | 61 | 61 | 61 | 61 | 61 | 61 | 61 | 61 |
| 20D0 | 61 | 61 | 61 | 61 | 61 | 61 | 61 | 61 | 61 | 61 | 61 | 61 | 61 | 61 | 61 | 61 |
| 20E0 | 61 | 61 | 61 | 61 | 61 | 61 | 61 | 61 | 61 | 61 | 61 | 61 | 61 | 61 | 61 | 61 |
| 20F0 | 61 | 61 | 61 | 61 | 61 | 61 | 61 | 61 | 61 | 61 | 61 | 61 | 61 | 61 | 61 | 61 |
| 2100 | 61 | 61 | 61 | 61 | 61 | 61 | 61 | 61 | 61 | 61 | 61 | 61 | 61 | 61 | 61 | 61 |
| 2110 | 61 | 61 | 61 | 61 | 61 | 61 | 61 | 61 | 61 | 61 | 61 | 61 | 61 | 61 | 61 | 61 |
| 2120 | 61 | 61 | 61 | 61 | 61 | 61 | 61 | 61 | 61 | 61 | 61 | 61 | 61 | 61 | 61 | 61 |
| 2130 | 61 | 61 | 61 | 61 | 61 | 61 | 61 | 61 | 61 | 61 | 61 | 61 | 61 | 61 | 61 | 61 |
| 2140 | 61 | 61 | 61 | 61 | 61 | 61 | 61 | 61 | 61 | 61 | 61 | 61 | 61 | 61 | 61 | 61 |
| 2150 | 61 | 61 | 61 | 61 | 61 | 61 | 61 | 61 | 61 | 61 | 61 | 61 | 61 | 61 | 61 | 61 |
| 2160 | 61 | 61 | 61 | 61 | 61 | 61 | 61 | 61 | 61 | 61 | 61 | 61 | 61 | 61 | 61 | 61 |
| 2170 | 61 | 61 | 61 | 61 | 61 | 61 | 61 | 61 | 61 | 61 | 61 | 61 | 61 | 61 | 61 | 61 |
| 2180 | 61 | 61 | 61 | 61 | 61 | 61 | 61 | 61 | 61 | 61 | 61 | 61 | 61 | 61 | 61 | 61 |
| 2190 | 61 | 61 | 61 | 61 | 61 | 61 | 61 | 61 | 61 | 61 | 61 | 61 | 61 | 61 | 61 | 61 |
| 21A0 | 61 | 61 | 61 | 61 | 61 | 61 | 61 | 61 | 61 | 61 | 61 | 61 | 61 | 61 | 61 | 61 |
| 21B0 | 61 | 61 | 61 | 61 | 61 | 61 | 61 | 61 | 61 | 61 | 61 | 61 | 61 | 61 | 61 | 61 |
| 21C0 | 61 | 61 | 61 | 61 | 61 | 61 | 61 | 61 | 61 | 61 | 61 | 61 | 61 | 61 | 61 | 61 |
| 21D0 | 61 | 61 | 61 | 61 | 61 | 61 | 61 | 61 | 61 | 61 | 61 | 61 | 61 | 61 | 61 | 61 |
| 21E0 | 61 | 61 | 61 | 61 | 61 | 61 | 61 | 61 | 61 | 61 | 61 | 61 | 61 | 61 | 61 | 61 |
| 21F0 | 61 | 61 | 61 | 61 | 61 | 61 | 61 | 61 | 61 | 61 | 61 | 61 | 61 | 61 | 61 | 61 |
| 2200 | 61 | 61 | 61 | 61 | 61 | 61 | 61 | 61 | 61 | 61 | 61 | 61 | 61 | 61 | 61 | 61 |
| 2210 | 61 | 61 | 61 | 61 | 61 | 61 | 61 | 61 | 61 | 61 | 61 | 61 | 61 | 61 | 61 | 61 |
| 2220 | 61 | 61 | 61 | 61 | 61 | 61 | 61 | 61 | 61 | 61 | 61 | 61 | 61 | 61 | 61 | 61 |
| 2230 | 61 | 61 | 61 | 61 | 61 | 61 | 61 | 61 | 61 | 61 | 61 | 61 | 61 | 61 | 61 | 61 |
| 2240 | 61 | 61 | 61 | 61 | 61 | 61 | 61 | 61 | 61 | 61 | 61 | 61 | 61 | 61 | 61 | 61 |
| 2250 | 61 | 61 | 61 | 61 | 61 | 61 | 61 | 61 | 61 | 61 | 61 | 61 | 61 | 61 | 61 | 61 |

```
2260    61  61  61  61  61  61  61  61  61  61  61  61  61  61  61  61
2270    61  61  61  61  61  61  61  61  61  61  61  61  61  61  61  61
2280    61  61  61  61  61  61  61  61  61  61  61  61  61  61  61  61
2290    61  61  61  61  61  61  61  61  61  61  61  61  61  61  61  61
22A0    61  61  61  61  61  61  61  61  61  61  61  61  61  61  61  61
22B0    61  61  61  61  61  61  61  61  61  61  61  61  61  61  61  61
22C0    61  61  61  61  61  61  61  61  61  61  61  61  61  61  61  61
22D0    61  61  61  61  61  61  61  61  61  61  61  61  61  61  61  61
22E0    61  61  61  61  61  61  61  61  61  61  61  61  61  61  61  61
22F0    61  61  61  61  61  61  61  61  61  61  61  61  61  61  61  61
2300    61  61  61  61  61  61  61  61  61  61  61  61  61  61  61  61
2310    61  61  61  61  61  61  61  61  61  61  61  61  61  61  61  61
2320    61  61  61  61  61  61  61  61  61  61  61  61  61  61  61  61
2330    61  61  61  61  61  61  61  61  61  61  61  61  61  61  61  61
2340    61  61  61  61  61  61  61  61  61  61  61  61  61  61  61  61
2350    61  61  61  61  61  61  61  61  61  61  61  61  61  61  61  61
2360    61  61  61  61  61  61  61  61  61  61  61  61  61  61  61  61
2370    61  61  61  61  61  61  61  61  61  61  61  61  61  61  61  61
2380    61  61  61  61  61  61  61  61  61  61  61  61  61  61  61  61
2390    61  61  61  61  61  61  61  61  61  61  61  61  61  61  61  61
23A0    61  61  61  61  61  61  61  61  61  61  61  61  61  61  61  61
23B0    61  61  61  61  61  61  61  61  61  61  61  61  61  61  61  61
23C0    61  61  61  61  61  61  61  61  61  61  61  61  61  61  61  61
23D0    61  61  61  61  61  61  61  61  61  61  61  61  61  61  61  61
23E0    61  61  61  61  61  61  61  61  61  61  61  61  61  61  61  61
23F0    61  61  61  61  61  61  61  61  61  61  61  61  61  61  61  61
2400    61  61  61  61  61  61  61  61  61  61  61  61  61  61  61  61
2410    61  61  61  61  61  61  61  61  61  61  61  61  61  61  61  61
2420    61  61  61  61  61  61  61  61  61  61  61  61  61  61  61  61
2430    61  61  61  61  61  61  61  61  61  61  61  61  61  61  61  61
2440    61  61  61  61  61  61  61  61  61  61  61  61  61  61  61  61
2450    61  61  61  61  61  61  61  61  61  61  61  61  61  61  61  61
2460    61  61  61  61  61  61  61  61  61  61  61  61  61  61  61  61
2470    61  61  61  61  61  61  61  61  61  61  61  61  61  61  61  61
2480    61  61  61  61  61  61  61  61  61  61  61  61  61  61  61  61
2490    61  61  61  61  61  61  61  61  61  61  61  61  61  61  61  61
24A0    61  61  61  61  61  61  61  61  61  61  61  61  61  61  61  61
24B0    61  61  61  61  61  61  61  61  61  61  61  61  61  61  61  61
24C0    61  61  61  61  61  61  61  61  61  61  61  61  61  61  61  61
24D0    61  61  61  61  61  61  61  61  61  61  61  61  61  61  61  61
24E0    61  61  61  61  61  61  61  61  61  61  61  61  61  61  61  61
24F0    61  61  61  61  61  61  61  61  61  61  61  61  61  61  61  61
2500    61  61  61  61  61  61  61  61  61  61  61  61  61  61  61  61
2510    61  61  61  61  61  61  61  61  61  61  61  61  61  61  61  61
2520    61  61  61  61  61  61  61  61  61  61  61  61  61  61  61  61
2530    61  61  61  61  61  61  61  61  61  61  61  61  61  61  61  61
2540    61  61  61  61  61  61  61  61  61  61  61  61  61  61  61  61
2550    61  61  61  61  61  61  61  61  61  61  61  61  61  61  61  61
2560    61  61  61  61  61  61  61  61  61  61  61  61  61  61  61  61
2570    61  61  61  61  61  61  61  61  61  61  61  61  61  61  61  61
2580    61  61  61  61  61  61  61  61  61  61  61  61  61  61  61  61
2590    61  61  61  61  61  61  61  61  61  61  61  61  61  61  61  61
25A0    61  61  61  61  61  61  61  61  61  61  61  61  61  61  61  61
25B0    61  61  61  61  61  61  61  61  61  61  61  61  61  61  61  61
25C0    61  61  61  61  61  61  61  61  61  61  61  61  61  61  61  61
```

```
25D0   61 61 61 61 61 61 61 61 61 61 61 61 61 61 61 61
25E0   61 61 61 61 61 61 61 61 61 61 61 61 61 61 61 61
25F0   61 61 61 61 61 61 61 61 61 61 61 61 61 61 61 61
2600   61 61 61 61 61 61 61 61 61 61 61 61 61 61 61 61
2610   61 61 61 61 61 61 61 61 61 61 61 61 61 61 61 61
2620   61 61 61 61 61 61 61 61 61 61 61 61 61 61 61 61
2630   61 61 61 61 61 61 61 61 61 61 61 61 61 61 61 61
2640   61 61 61 61 61 61 61 61 61 61 61 61 61 61 61 61
2650   61 61 61 61 61 61 61 61 61 61 61 61 61 61 61 61
2660   61 61 61 61 61 61 61 61 61 61 61 61 61 61 61 61
2670   61 61 61 61 61 61 61 61 61 61 61 61 61 61 61 61
2680   61 61 61 61 61 61 61 61 61 61 61 61 61 61 61 61
2690   61 61 61 61 61 61 61 61 61 61 61 61 61 61 61 61
26A0   61 61 61 61 61 61 61 61 61 61 61 61 61 61 61 61
26B0   61 61 61 61 61 61 61 61 61 61 61 61 61 61 61 61
26C0   61 61 61 61 61 61 61 61 61 61 61 61 61 61 61 61
26D0   61 61 61 61 61 61 61 61 61 61 61 61 61 61 61 61
26E0   61 61 61 61 61 61 61 61 61 61 61 61 61 61 61 61
26F0   61 61 61 61 61 61 61 61 61 61 61 61 61 61 61 61
2700   61 61 61 61 61 61 61 61 61 61 61 61 61 61 61 61
2710   61 61 61 61 61 61 61 61 61 61 61 61 61 61 61 61
2720   61 61 61 61 61 61 61 61 61 61 61 61 61 61 61 61
2730   61 61 61 61 61 61 61 61 61 61 61 61 61 61 61 61
2740   61 61 61 61 61 61 61 61 61 61 61 61 61 61 61 61
2750   61 61 61 61 61 61 61 61 61 61 61 61 61 61 61 61
2760   61 61 61 61 61 61 61 61 61 61 61 61 61 61 61 61
2770   61 61 61 61 61 61 61 61 61 61 61 61 61 61 61 61
2780   61 61 61 61 61 61 61 61 61 61 61 61 61 61 61 61
2790   61 61 61 61 61 61 61 61 61 61 61 61 61 61 61 61
27A0   61 61 61 61 61 61 61 61 61 61 61 61 61 61 61 61
27B0   61 61 61 61 61 61 61 61 61 61 61 61 61 61 61 61
27C0   61 61 61 61 61 61 61 61 61 61 61 61 61 61 61 61
27D0   61 61 61 61 61 61 61 61 61 61 61 61 61 61 61 61
27E0   61 61 61 61 61 61 61 61 61 61 61 61 61 61 61 61
27F0   61 61 61 61 61 61 61 61 61 61 61 61 61 61 61 61
2800   61 61 61 61 61 61 61 61 61 61 61 61 61 61 61 61
2810   61 61 61 61 61 61 61 61 61 61 61 61 61 61 61 61
2820   61 61 61 61 61 61 61 61 61 61 61 61 61 61 61 61
2830   61 61 61 61 61 61 61 61 61 61 61 61 61 61 61 61
2840   61 61 61 61 61 61 61 61 61 61 61 61 61 61 61 61
2850   61 61 61 61 61 61 61 61 61 61 61 61 61 61 61 61
2860   61 61 61 61 61 61 61 61 61 61 61 61 61 61 61 61
2870   61 61 61 61 61 61 61 61 61 61 61 61 61 61 61 61
2880   61 61 61 61 61 61 61 61 61 61 61 61 61 61 61 61
2890   61 61 61 61 61 61 61 61 61 61 61 61 61 61 61 61
28A0   61 61 61 61 61 61 61 61 61 61 61 61 61 61 61 61
28B0   61 61 61 61 61 61 61 61 61 61 61 61 61 61 61 61
28C0   61 61 61 61 61 61 61 61 61 61 61 61 61 61 61 61
28D0   61 61 61 61 61 61 61 61 61 61 61 61 61 61 61 61
28E0   61 61 61 61 61 61 61 61 61 61 61 61 61 61 61 61
28F0   61 61 61 61 61 61 61 61 61 61 61 61 61 61 61 61
2900   61 61 61 61 61 61 61 61 61 61 61 61 61 61 61 61
2910   61 61 61 61 61 61 61 61 61 61 61 61 61 61 61 61
2920   61 61 61 61 61 61 61 61 61 61 61 61 61 61 61 61
2930   61 61 61 61 61 61 61 61 61 61 61 61 61 61 61 61
```

```
2940    61  61  61  61  61  61  61  61  61  61  61  61  61  61  61  61
2950    61  61  61  61  61  61  61  61  61  61  61  61  61  61  61  61
2960    61  61  61  61  61  61  61  61  61  61  61  61  61  61  61  61
2970    61  61  61  61  61  61  61  61  61  61  61  61  61  61  61  61
2980    61  61  61  61  61  61  61  61  61  61  61  61  61  61  61  61
2990    61  61  61  61  61  61  61  61  61  61  61  61  61  61  61  61
29A0    61  61  61  61  61  61  61  61  61  61  61  61  61  61  61  61
29B0    61  61  61  61  61  61  61  61  61  61  61  61  61  61  61  61
29C0    61  61  61  61  61  61  61  61  61  61  61  61  61  61  61  61
29D0    61  61  61  61  61  61  61  61  61  61  61  61  61  61  61  61
29E0    61  61  61  61  61  61  61  61  61  61  61  61  61  61  61  61
29F0    61  61  61  61  61  61  61  61  61  61  61  61  61  61  61  61
2A00    61  61  61  61  61  61  61  61  61  61  61  61  61  61  61  61
2A10    61  61  61  61  61  61  61  61  61  61  61  61  61  61  61  61
2A20    61  61  61  61  61  61  61  61  61  61  61  61  61  61  61  61
2A30    61  61  61  61  61  61  61  61  61  61  61  61  61  61  61  61
2A40    61  61  61  61  61  61  61  61  61  61  61  61  61  61  61  61
2A50    61  61  61  61  61  61  61  61  61  61  61  61  61  61  61  61
2A60    61  61  61  61  61  61  61  61  61  61  61  61  61  61  61  61
2A70    61  61  61  61  61  61  61  61  61  61  61  61  61  61  61  61
2A80    61  61  61  61  61  61  61  61  61  61  61  61  61  61  61  61
2A90    61  61  61  61  61  61  61  61  61  61  61  61  61  61  61  61
2AA0    61  61  61  61  61  61  61  61  61  61  61  61  61  61  61  61
2AB0    61  61  61  61  61  61  61  61  61  61  61  61  61  61  61  61
2AC0    61  61  61  61  61  61  61  61  61  61  61  61  61  61  61  61
2AD0    61  61  61  61  61  61  61  61  61  61  61  61  61  61  61  61
2AE0    61  61  61  61  61  61  61  61  61  61  61  61  61  61  61  61
2AF0    61  61  61  61  61  61  61  61  61  61  61  61  61  61  61  61
2B00    61  61  61  61  61  61  61  61  61  61  61  61  61  61  61  61
2B10    61  61  61  61  61  61  61  61  61  61  61  61  61  61  61  61
2B20    61  61  61  61  61  61  61  61  61  61  61  61  61  61  61  61
2B30    61  61  61  61  61  61  61  61  61  61  61  61  61  61  61  61
2B40    61  61  61  61  61  61  61  61  61  61  61  61  61  61  61  61
2B50    61  61  61  61  61  61  61  61  61  61  61  61  61  61  61  61
2B60    61  61  61  61  61  61  61  61  61  61  61  61  61  61  61  61
2B70    61  61  61  61  61  61  61  61  61  61  61  61  61  61  61  61
2B80    61  61  61  61  61  61  61  61  61  61  61  61  61  61  61  61
2B90    61  61  61  61  61  61  61  61  61  61  61  61  61  61  61  61
2BA0    61  61  61  61  61  61  61  61  61  61  61  61  61  61  61  61
2BB0    61  61  61  61  61  61  61  61  61  61  61  61  61  61  61  61
2BC0    61  61  61  61  61  61  61  61  61  61  61  61  61  61  61  61
2BD0    61  61  61  61  61  61  61  61  61  61  61  61  61  61  61  61
2BE0    61  61  61  61  61  61  61  61  61  61  61  61  61  61  61  61
2BF0    61  61  61  61  61  61  61  61  61  61  61  61  61  61  61  61
2C00    61  61  61  61  61  61  61  61  61  61  61  61  61  61  61  61
2C10    61  61  61  61  61  61  61  61  61  61  61  61  61  61  61  61
2C20    61  61  61  61  61  61  61  61  61  61  61  61  61  61  61  61
2C30    61  61  61  61  61  61  61  61  61  61  61  61  61  61  61  61
2C40    61  61  61  61  61  61  61  61  61  61  61  61  61  61  61  61
2C50    61  61  61  61  61  61  61  61  61  61  61  61  61  61  61  61
2C60    61  61  61  61  61  61  61  61  61  61  61  61  61  61  61  61
2C70    61  61  61  61  61  61  61  61  61  61  61  61  61  61  61  61
2C80    61  61  61  61  61  61  61  61  61  61  61  61  61  61  61  61
2C90    61  61  61  61  61  61  61  61  61  61  61  61  61  61  61  61
2CA0    61  61  61  61  61  61  61  61  61  61  61  61  61  61  61  61
```

```
2CB0    61  61  61  61  61  61  61  61  61  61  61  61  61  61  61  61
2CC0    61  61  61  61  61  61  61  61  61  61  61  61  61  61  61  61
2CD0    61  61  61  61  61  61  61  61  61  61  61  61  61  61  61  61
2CE0    61  61  61  61  61  61  61  61  61  61  61  61  61  61  61  61
2CF0    61  61  61  61  61  61  61  61  61  61  61  61  61  61  61  61
2D00    61  61  61  61  61  61  61  61  61  61  61  61  61  61  61  61
2D10    61  61  61  61  61  61  61  61  61  61  61  61  61  61  61  61
2D20    61  61  61  61  61  61  61  61  61  61  61  61  61  61  61  61
2D30    61  61  61  61  61  61  61  61  61  61  61  61  61  61  61  61
2D40    61  61  61  61  61  61  61  61  61  61  61  61  61  61  61  61
2D50    61  61  61  61  61  61  61  61  61  61  61  61  61  61  61  61
2D60    61  61  61  61  61  61  61  61  61  61  61  61  61  61  61  61
2D70    61  61  61  61  61  61  61  61  61  61  61  61  61  61  61  61
2D80    61  61  61  61  61  61  61  61  61  61  61  61  61  61  61  61
2D90    61  61  61  61  61  61  61  61  61  61  61  61  61  61  61  61
2DA0    61  61  61  61  61  61  61  61  61  61  61  61  61  61  61  61
2DB0    61  61  61  61  61  61  61  61  61  61  61  61  61  61  61  61
2DC0    61  61  61  61  61  61  61  61  61  61  61  61  61  61  61  61
2DD0    61  61  61  61  61  61  61  61  61  61  61  61  61  61  61  61
2DE0    61  61  61  61  61  61  61  61  61  61  61  61  61  61  61  61
2DF0    61  61  61  61  61  61  61  61  61  61  61  61  61  61  61  61
2E00    61  61  61  61  61  61  61  61  61  61  61  61  61  61  61  61
2E10    61  61  61  61  61  61  61  61  61  61  61  61  61  61  61  61
2E20    61  61  61  61  61  61  61  61  61  61  61  61  61  61  61  61
2E30    61  61  61  61  61  61  61  61  61  61  61  61  61  61  61  61
2E40    61  61  61  61  61  61  61  61  61  61  61  61  61  61  61  61
2E50    61  61  61  61  61  61  61  61  61  61  61  61  61  61  61  61
2E60    61  61  61  61  61  61  61  61  61  61  61  61  61  61  61  61
2E70    61  61  61  61  61  61  61  61  61  61  61  61  61  61  61  61
2E80    61  61  61  61  61  61  61  61  61  61  61  61  61  61  61  61
2E90    61  61  61  61  61  61  61  61  61  61  61  61  61  61  61  61
2EA0    61  61  61  61  61  61  61  61  61  61  61  61  61  61  61  61
2EB0    61  61  61  61  61  61  61  61  61  61  61  61  61  61  61  61
2EC0    61  61  61  61  61  61  61  61  61  61  61  61  61  61  61  61
2ED0    61  61  61  61  61  61  61  61  61  61  61  61  61  61  61  61
2EE0    61  61  61  61  61  61  61  61  61  61  61  61  61  61  61  61
2EF0    61  61  61  61  61  61  61  61  61  61  61  61  61  61  61  61
2F00    61  61  61  61  61  61  61  61  61  61  61  61  61  61  61  61
2F10    61  61  61  61  61  61  61  61  61  61  61  61  61  61  61  61
2F20    61  61  61  61  61  61  61  61  61  61  61  61  61  61  61  61
2F30    61  61  61  61  61  61  61  61  61  61  61  61  61  61  61  61
2F40    61  61  61  61  61  61  61  61  61  61  61  61  61  61  61  61
2F50    61  61  61  61  61  61  61  61  61  61  61  61  61  61  61  61
2F60    61  61  61  61  61  61  61  61  61  61  61  61  61  61  61  61
2F70    61  61  61  61  61  61  61  61  61  61  61  61  61  61  61  61
2F80    61  61  61  61  61  61  61  61  61  61  61  61  61  61  61  61
2F90    61  61  61  61  61  61  61  61  61  61  61  61  61  61  61  61
2FA0    61  61  61  61  61  61  61  61  61  61  61  61  61  61  61  61
2FB0    61  61  61  61  61  61  61  61  61  61  61  61  61  61  61  61
2FC0    61  61  61  61  61  61  61  61  61  61  61  61  61  61  61  61
2FD0    61  61  61  61  61  61  61  61  61  61  61  61  61  61  61  61
2FE0    61  61  61  61  61  61  61  61  61  61  61  61  61  61  61  61
2FF0    61  61  61  61  61  61  61  61  61  61  61  61  61  61  61  61
3000    61  61  61  61  61  61  61  61  61  61  61  61  61  61  61  61
3010    61  61  61  61  61  61  61  61  61  61  61  61  61  61  61  61
```

0178082

```
3020     61  61  61  61  61  61  61  61  61  61  61  61  61  61  61  61
3030     61  61  61  61  61  61  61  61  61  61  61  61  61  61  61  61
3040     61  61  61  61  61  61  61  61  61  61  61  61  61  61  61  61
3050     61  61  61  61  61  61  61  61  61  61  61  61  61  61  61  61
3060     61  61  61  61  61  61  61  61  61  61  61  61  61  61  61  61
3070     61  61  61  61  61  61  61  61  61  61  61  61  61  61  61  61
3080     61  61  61  61  61  61  61  61  61  61  61  61  61  61  61  61
3090     61  61  61  61  61  61  61  61  61  61  61  61  61  61  61  61
30A0     61  61  61  61  61  61  61  61  61  61  61  61  61  61  61  61
30B0     61  61  61  61  61  61  61  61  61  61  61  61  61  61  61  61
30C0     61  61  61  61  61  61  61  61  61  61  61  61  61  61  61  61
30D0     61  61  61  61  61  61  61  61  61  61  61  61  61  61  61  61
30E0     61  61  61  61  61  61  61  61  61  61  61  61  61  61  61  61
30F0     61  61  61  61  61  61  61  61  61  61  61  61  61  61  61  61
3100     61  61  61  61  61  61  61  61  61  61  61  61  61  61  61  61
3110     61  61  61  61  61  61  61  61  61  61  61  61  61  61  61  61
3120     61  61  61  61  61  61  61  61  61  61  61  61  61  61  61  61
3130     61  61  61  61  61  61  61  61  61  61  61  61  61  61  61  61
3140     61  61  61  61  61  61  61  61  61  61  61  61  61  61  61  61
3150     61  61  61  61  61  61  61  61  61  61  61  61  61  61  61  61
3160     61  61  61  61  61  61  61  61  61  61  61  61  61  61  61  61
3170     61  61  61  61  61  61  61  61  61  61  61  61  61  61  61  61
3180     61  61  61  61  61  61  61  61  61  61  61  61  61  61  61  61
3190     61  61  61  61  61  61  61  61  61  61  61  61  61  61  61  61
31A0     61  61  61  61  61  61  61  61  61  61  61  61  61  61  61  61
31B0     61  61  61  61  61  61  61  61  61  61  61  61  61  61  61  61
31C0     61  61  61  61  61  61  61  61  61  61  61  61  61  61  61  61
31D0     61  61  61  61  61  61  61  61  61  61  61  61  61  61  61  61
31E0     61  61  61  61  61  61  61  61  61  61  61  61  61  61  61  61
31F0     61  61  61  61  61  61  61  61  61  61  61  61  61  61  61  61
3200     61  61  61  61  61  61  61  61  61  61  61  61  61  61  61  61
3210     61  61  61  61  61  61  61  61  61  61  61  61  61  61  61  61
3220     61  61  61  61  61  61  61  61  61  61  61  61  61  61  61  61
3230     61  61  61  61  61  61  61  61  61  61  61  61  61  61  61  61
3240     61  61  61  61  61  61  61  61  61  61  61  61  61  61  61  61
3250     61  61  61  61  61  61  61  61  61  61  61  61  61  61  61  61
3260     61  61  61  61  61  61  61  61  61  61  61  61  61  61  61  61
3270     61  61  61  61  61  61  61  61  61  61  61  61  61  61  61  61
3280     61  61  61  61  61  61  61  61  61  61  61  61  61  61  61  61
3290     61  61  61  61  61  61  61  61  61  61  61  61  61  61  61  61
32A0     61  61  61  61  61  61  61  61  61  61  61  61  61  61  61  61
32B0     61  61  61  61  61  61  61  61  61  61  61  61  61  61  61  61
32C0     61  61  61  61  61  61  61  61  61  61  61  61  61  61  61  61
32D0     61  61  61  61  61  61  61  61  61  61  61  61  61  61  61  61
32E0     61  61  61  61  61  61  61  61  61  61  61  61  61  61  61  61
32F0     61  61  61  61  61  61  61  61  61  61  61  61  61  61  61  61
3300     61  61  61  61  61  61  61  61  61  61  61  61  61  61  61  61
3310     61  61  61  61  61  61  61  61  61  61  61  61  61  61  61  61
3320     61  61  61  61  61  61  61  61  61  61  61  61  61  61  61  61
3330     61  61  61  61  61  61  61  61  61  61  61  61  61  61  61  61
3340     61  61  61  61  61  61  61  61  61  61  61  61  61  61  61  61
3350     61  61  61  61  61  61  61  61  61  61  61  61  61  61  61  61
3360     61  61  61  61  61  61  61  61  61  61  61  61  61  61  61  61
3370     61  61  61  61  61  61  61  61  61  61  61  61  61  61  61  61
3380     61  61  61  61  61  61  61  61  61  61  61  61  61  61  61  61
```

```
3390   61 61 61 61 61 61 61 61 61 61 61 61 61 61 61 61
33A0   61 61 61 61 61 61 61 61 61 61 61 61 61 61 61 61
33B0   61 61 61 61 61 61 61 61 61 61 61 61 61 61 61 61
33C0   61 61 61 61 61 61 61 61 61 61 61 61 61 61 61 61
33D0   61 61 61 61 61 61 61 61 61 61 61 61 61 61 61 61
33E0   61 61 61 61 61 61 61 61 61 61 61 61 61 61 61 61
33F0   61 61 61 61 61 61 61 61 61 61 61 61 61 61 61 61
3400   61 61 61 61 61 61 61 61 61 61 61 61 61 61 61 61
3410   61 61 61 61 61 61 61 61 61 61 61 61 61 61 61 61
3420   61 61 61 61 61 61 61 61 61 61 61 61 61 61 61 61
3430   61 61 61 61 61 61 61 61 61 61 61 61 61 61 61 61
3440   61 61 61 61 61 61 61 61 61 61 61 61 61 61 61 61
3450   61 61 61 61 61 61 61 61 61 61 61 61 61 61 61 61
3460   61 61 61 61 61 61 61 61 61 61 61 61 61 61 61 61
3470   61 61 61 61 61 61 61 61 61 61 61 61 61 61 61 61
3480   61 61 61 61 61 61 61 61 61 61 61 61 61 61 61 61
3490   61 61 61 61 61 61 61 61 61 61 61 61 61 61 61 61
34A0   61 61 61 61 61 61 61 61 61 61 61 61 61 61 61 61
34B0   61 61 61 61 61 61 61 61 61 61 61 61 61 61 61 61
34C0   61 61 61 61 61 61 61 61 61 61 61 61 61 61 61 61
34D0   61 61 61 61 61 61 61 61 61 61 61 61 61 61 61 61
34E0   61 61 61 61 61 61 61 61 61 61 61 61 61 61 61 61
34F0   61 61 61 61 61 61 61 61 61 61 61 61 61 61 61 61
3500   61 61 61 61 61 61 61 61 61 61 61 61 61 61 61 61
3510   61 61 61 61 61 61 61 61 61 61 61 61 61 61 61 61
3520   61 61 61 61 61 61 61 61 61 61 61 61 61 61 61 61
3530   61 61 61 61 61 61 61 61 61 61 61 61 61 61 61 61
3540   61 61 61 61 61 61 61 61 61 61 61 61 61 61 61 61
3550   61 61 61 61 61 61 61 61 61 61 61 61 61 61 61 61
3560   61 61 61 61 61 61 61 61 61 61 61 61 61 61 61 61
3570   61 61 61 61 61 61 61 61 61 61 61 61 61 61 61 61
3580   61 61 61 61 61 61 61 61 61 61 61 61 61 61 61 61
3590   61 61 61 61 61 61 61 61 61 61 61 61 61 61 61 61
35A0   61 61 61 61 61 61 61 61 61 61 61 61 61 61 61 61
35B0   61 61 61 61 61 61 61 61 61 61 61 61 61 61 61 61
35C0   61 61 61 61 61 61 61 61 61 61 61 61 61 61 61 61
35D0   61 61 61 61 61 61 61 61 61 61 61 61 61 61 61 61
35E0   61 61 61 61 61 61 61 61 61 61 61 61 61 61 61 61
35F0   61 61 61 61 61 61 61 61 61 61 61 61 61 61 61 61
3600   61 61 61 61 61 61 61 61 61 61 61 61 61 61 61 61
3610   61 61 61 61 61 61 61 61 61 61 61 61 61 61 61 61
3620   61 61 61 61 61 61 61 61 61 61 61 61 61 61 61 61
3630   61 61 61 61 61 61 61 61 61 61 61 61 61 61 61 61
3640   61 61 61 61 61 61 61 61 61 61 61 61 61 61 61 61
3650   61 61 61 61 61 61 61 61 61 61 61 61 61 61 61 61
3660   61 61 61 61 61 61 61 61 61 61 61 61 61 61 61 61
3670   61 61 61 61 61 61 61 61 61 61 61 61 61 61 61 61
3680   61 61 61 61 61 61 61 61 61 61 61 61 61 61 61 61
3690   61 61 61 61 61 61 61 61 61 61 61 61 61 61 61 61
36A0   61 61 61 61 61 61 61 61 61 61 61 61 61 61 61 61
36B0   61 61 61 61 61 61 61 61 61 61 61 61 61 61 61 61
36C0   61 61 61 61 61 61 61 61 61 61 61 61 61 61 61 61
36D0   61 61 61 61 61 61 61 61 61 61 61 61 61 61 61 61
36E0   61 61 61 61 61 61 61 61 61 61 61 61 61 61 61 61
36F0   61 61 61 61 61 61 61 61 61 61 61 61 61 61 61 61
```

```
3700   61 61 61 61 61 61 61 61 61 61 61 61 61 61 61 61
3710   61 61 61 61 61 61 61 61 61 61 61 61 61 61 61 61
3720   61 61 61 61 61 61 61 61 61 61 61 61 61 61 61 61
3730   61 61 61 61 61 61 61 61 61 61 61 61 61 61 61 61
3740   61 61 61 61 61 61 61 61 61 61 61 61 61 61 61 61
3750   61 61 61 61 61 61 61 61 61 61 61 61 61 61 61 61
3760   61 61 61 61 61 61 61 61 61 61 61 61 61 61 61 61
3770   61 61 61 61 61 61 61 61 61 61 61 61 61 61 61 61
3780   61 61 61 61 61 61 61 61 61 61 61 61 61 61 61 61
3790   61 61 61 61 61 61 61 61 61 61 61 61 61 61 61 61
37A0   61 61 61 61 61 61 61 61 61 61 61 61 61 61 61 61
37B0   61 61 61 61 61 61 61 61 61 61 61 61 61 61 61 61
37C0   61 61 61 61 61 61 61 61 61 61 61 61 61 61 61 61
37D0   61 61 61 61 61 61 61 61 61 61 61 61 61 61 61 61
37E0   61 61 61 61 61 61 61 61 61 61 61 61 61 61 61 61
37F0   61 61 61 61 61 61 61 61 61 61 61 61 61 61 61 61
3800   61 61 61 61 61 61 61 61 61 61 61 61 61 61 61 61
3810   61 61 61 61 61 61 61 61 61 61 61 61 61 61 61 61
3820   61 61 61 61 61 61 61 61 61 61 61 61 61 61 61 61
3830   61 61 61 61 61 61 61 61 61 61 61 61 61 61 61 61
3840   61 61 61 61 61 61 61 61 61 61 61 61 61 61 61 61
3850   61 61 61 61 61 61 61 61 61 61 61 61 61 61 61 61
3860   61 61 61 61 61 61 61 61 61 61 61 61 61 61 61 61
3870   61 61 61 61 61 61 61 61 61 61 61 61 61 61 61 61
3880   61 61 61 61 61 61 61 61 61 61 61 61 61 61 61 61
3890   61 61 61 61 61 61 61 61 61 61 61 61 61 61 61 61
38A0   61 61 61 61 61 61 61 61 61 61 61 61 61 61 61 61
38B0   61 61 61 61 61 61 61 61 61 61 61 61 61 61 61 61
38C0   61 61 61 61 61 61 61 61 61 61 61 61 61 61 61 61
38D0   61 61 61 61 61 61 61 61 61 61 61 61 61 61 61 61
38E0   61 61 61 61 61 61 61 61 61 61 61 61 61 61 61 61
38F0   61 61 61 61 61 61 61 61 61 61 61 61 61 61 61 61
3900   61 61 61 61 61 61 61 61 61 61 61 61 61 61 61 61
3910   61 61 61 61 61 61 61 61 61 61 61 61 61 61 61 61
3920   61 61 61 61 61 61 61 61 61 61 61 61 61 61 61 61
3930   61 61 61 61 61 61 61 61 61 61 61 61 61 61 61 61
3940   61 61 61 61 61 61 61 61 61 61 61 61 61 61 61 61
3950   61 61 61 61 61 61 61 61 61 61 61 61 61 61 61 61
3960   61 61 61 61 61 61 61 61 61 61 61 61 61 61 61 61
3970   61 61 61 61 61 61 61 61 61 61 61 61 61 61 61 61
3980   61 61 61 61 61 61 61 61 61 61 61 61 61 61 61 61
3990   61 61 61 61 61 61 61 61 61 61 61 61 61 61 61 61
39A0   61 61 61 61 61 61 61 61 61 61 61 61 61 61 61 61
39B0   61 61 61 61 61 61 61 61 61 61 61 61 61 61 61 61
39C0   61 61 61 61 61 61 61 61 61 61 61 61 61 61 61 61
39D0   61 61 61 61 61 61 61 61 61 61 61 61 61 61 61 61
39E0   61 61 61 61 61 61 61 61 61 61 61 61 61 61 61 61
39F0   61 61 61 61 61 61 61 61 61 61 61 61 61 61 61 61
3A00   61 61 61 61 61 61 61 61 61 61 61 61 61 61 61 61
3A10   61 61 61 61 61 61 61 61 61 61 61 61 61 61 61 61
3A20   61 61 61 61 61 61 61 61 61 61 61 61 61 61 61 61
3A30   61 61 61 61 61 61 61 61 61 61 61 61 61 61 61 61
3A40   61 61 61 61 61 61 61 61 61 61 61 61 61 61 61 61
3A50   61 61 61 61 61 61 61 61 61 61 61 61 61 61 61 61
3A60   61 61 61 61 61 61 61 61 61 61 61 61 61 61 61 61
```

```
3A70    61  61  61  61  61  61  61  61  61  61  61  61  61  61  61  61
3A80    61  61  61  61  61  61  61  61  61  61  61  61  61  61  61  61
3A90    61  61  61  61  61  61  61  61  61  61  61  61  61  61  61  61
3AA0    61  61  61  61  61  61  61  61  61  61  61  61  61  61  61  61
3AB0    61  61  61  61  61  61  61  61  61  61  61  61  61  61  61  61
3AC0    61  61  61  61  61  61  61  61  61  61  61  61  61  61  61  61
3AD0    61  61  61  61  61  61  61  61  61  61  61  61  61  61  61  61
3AE0    61  61  61  61  61  61  61  61  61  61  61  61  61  61  61  61
3AF0    61  61  61  61  61  61  61  61  61  61  61  61  61  61  61  61
3B00    61  61  61  61  61  61  61  61  61  61  61  61  61  61  61  61
3B10    61  61  61  61  61  61  61  61  61  61  61  61  61  61  61  61
3B20    61  61  61  61  61  61  61  61  61  61  61  61  61  61  61  61
3B30    61  61  61  61  61  61  61  61  61  61  61  61  61  61  61  61
3B40    61  61  61  61  61  61  61  61  61  61  61  61  61  61  61  61
3B50    61  61  61  61  61  61  61  61  61  61  61  61  61  61  61  61
3B60    61  61  61  61  61  61  61  61  61  61  61  61  61  61  61  61
3B70    61  61  61  61  61  61  61  61  61  61  61  61  61  61  61  61
3B80    61  61  61  61  61  61  61  61  61  61  61  61  61  61  61  61
3B90    61  61  61  61  61  61  61  61  61  61  61  61  61  61  61  61
3BA0    61  61  61  61  61  61  61  61  61  61  61  61  61  61  61  61
3BB0    61  61  61  61  61  61  61  61  61  61  61  61  61  61  61  61
3BC0    61  61  61  61  61  61  61  61  61  61  61  61  61  61  61  61
3BD0    61  61  61  61  61  61  61  61  61  61  61  61  61  61  61  61
3BE0    61  61  61  61  61  61  61  61  61  61  61  61  61  61  61  61
3BF0    61  61  61  61  61  61  61  61  61  61  61  61  61  61  61  61
3C00    61  61  61  61  61  61  61  61  61  61  61  61  61  61  61  61
3C10    61  61  61  61  61  61  61  61  61  61  61  61  61  61  61  61
3C20    61  61  61  61  61  61  61  61  61  61  61  61  61  61  61  61
3C30    61  61  61  61  61  61  61  61  61  61  61  61  61  61  61  61
3C40    61  61  61  61  61  61  61  61 ·61  61  61  61  61  61  61  61
3C50    61  61  61  61  61  61  61  61  61  61  61  61  61  61  61  61
3C60    61  61  61  61  61  61  61  61  61  61  61  61  61  61  61  61
3C70    61  61  61  61  61  61  61  61  61  61  61  61  61  61  61  61
3C80    61  61  61  61  61  61  61  61  61  61  61  61  61  61  61  61
3C90    61  61  61  61  61  61  61  61  61  61  61  61  61  61  61  61
3CA0    61  61  61  61  61  61  61  61  61  61  61  61  61  61  61  61
3CB0    61  61  61  61  61  61  61  61  61  61  61  61  61  61  61  61
3CC0    61  61  61  61  61  61  61  61  61  61  61  61  61  61  61  61
3CD0    61  61  61  61  61  61  61  61  61  61  61  61  61  61  61  61
3CE0    61  61  61  61  61  61  61  61  61  61  61  61  61  61  61  61
3CF0    61  61  61  61  61  61  61  61  61  61  61  61  61  61  61  61
3D00    61  61  61  61  61  61  61  61  61  61  61  61  61  61  61  61
3D10    61  61  61  61  61  61  61  61  61  61  61  61  61  61  61  61
3D20    61  61  61  61  61  61  61  61  61  61  61  61  61  61  61  61
3D30    61  61  61  61  61  61  61  61  61  61  61  61  61  61  61  61
3D40    61  61  61  61  61  61  61  61  61  61  61  61  61  61  61  61
3D50    61  61  61  61  61  61  61  61  61  61  61  61  61  61  61  61
3D60    61  61  61  61  61  61  61  61  61  61  61  61  61  61  61  61
3D70    61  61  61  61  61  61  61  61  61  61  61  61  61  61  61  61
3D80    61  61  61  61  61  61  61  61  61  61  61  61  61  61  61  61
3D90    61  61  61  61  61  61  61  61  61  61  61  61  61  61  61  61
3DA0    61  61  61  61  61  61  61  61  61  61  61  61  61  61  61  61
3DB0    61  61  61  61  61  61  61  61  61  61  61  61  61  61  61  61
3DC0    61  61  61  61  61  61  61  61  61  61  61  61  61  61  61  61
3DD0    61  61  61  61  61  61  61  61  61  61  61  61  61  61  61  61
```

```
3DE0   61  61  61  61  61  61  61  61  61  61  61  61  61  61  61  61
3DF0   61  61  61  61  61  61  61  61  61  61  61  61  61  61  61  61
3E00   61  61  61  61  61  61  61  61  61  61  61  61  61  61  61  61
3E10   61  61  61  61  61  61  61  61  61  61  61  61  61  61  61  61
3E20   61  61  61  61  61  61  61  61  61  61  61  61  61  61  61  61
3E30   61  61  61  61  61  61  61  61  61  61  61  61  61  61  61  61
3E40   61  61  61  61  61  61  61  61  61  61  61  61  61  61  61  61
3E50   61  61  61  61  61  61  61  61  61  61  61  61  61  61  61  61
3E60   61  61  61  61  61  61  61  61  61  61  61  61  61  61  61  61
3E70   61  61  61  61  61  61  61  61  61  61  61  61  61  61  61  61
3E80   61  61  61  61  61  61  61  61  61  61  61  61  61  61  61  61
3E90   61  61  61  61  61  61  61  61  61  61  61  61  61  61  61  61
3EA0   61  61  61  61  61  61  61  61  61  61  61  61  61  61  61  61
3EB0   61  61  61  61  61  61  61  61  61  61  61  61  61  61  61  61
3EC0   61  61  61  61  61  61  61  61  61  61  61  61  61  61  61  61
3ED0   61  61  61  61  61  61  61  61  61  61  61  61  61  61  61  61
3EE0   61  61  61  61  61  61  61  61  61  61  61  61  61  61  61  61
3EF0   61  61  61  61  61  61  61  61  61  61  61  61  61  61  61  61
3F00   61  61  61  61  61  61  61  61  61  61  61  61  61  61  61  61
3F10   61  61  61  61  61  61  61  61  61  61  61  61  61  61  61  61
3F20   61  61  61  61  61  61  61  61  61  61  61  61  61  61  61  61
3F30   61  61  61  61  61  61  61  61  61  61  61  61  61  61  61  61
3F40   61  61  61  61  61  61  61  61  61  61  61  61  61  61  61  61
3F50   61  61  61  61  61  61  61  61  61  61  61  61  61  61  61  61
3F60   61  61  61  61  61  61  61  61  61  61  61  61  61  61  61  61
3F70   61  61  61  61  61  61  61  61  61  61  61  61  61  61  61  61
3F80   61  61  61  61  61  61  61  61  61  61  61  61  61  61  61  61
3F90   61  61  61  61  61  61  61  61  61  61  61  61  61  61  61  61
3FA0   61  61  61  61  61  61  61  61  61  61  61  61  61  61  61  61
3FB0   61  61  61  61  61  61  61  61  61  61  61  61  61  61  61  61
3FC0   61  61  61  61  61  61  61  61  61  61  61  61  61  61  61  61
3FD0   61  61  61  61  61  61  61  61  61  61  61  61  61  61  61  61
3FE0   61  61  61  61  61  61  61  61  61  61  61  61  61  61  61  61
3FF0   61  61  61  61  61  61  61  61  61  61  61  61  61  61  61  61
```

0178082

| Address | | | | | | | Contents of ROM 18 | | | | | | | | | |
|---|---|---|---|---|---|---|---|---|---|---|---|---|---|---|---|---|
| 0000 | 00 | 00 | 00 | 00 | 00 | 00 | 00 | 00 | 00 | 00 | 00 | 00 | 00 | 00 | 00 | 00 |
| 0010 | 00 | 00 | 00 | 00 | 00 | 00 | 00 | 00 | 00 | 00 | 00 | 00 | 00 | 00 | 00 | 00 |
| 0020 | 00 | 00 | 00 | 00 | 00 | 00 | 00 | 00 | 00 | 00 | 00 | 00 | 00 | 00 | 00 | 00 |
| 0030 | 00 | 00 | 00 | 00 | 00 | 00 | 00 | 00 | 00 | 00 | 00 | 00 | 00 | 00 | 00 | 00 |
| 0040 | 00 | 00 | 00 | 00 | 00 | 00 | 00 | 00 | 00 | 00 | 00 | 00 | 00 | 00 | 00 | 00 |
| 0050 | 00 | 00 | 00 | 00 | 00 | 00 | 00 | 00 | 00 | 00 | 00 | 00 | 00 | 00 | 00 | 00 |
| 0060 | 00 | 00 | 00 | 00 | 00 | 00 | 00 | 00 | 00 | 00 | 00 | 00 | 00 | 00 | 00 | 00 |
| 0070 | 00 | 00 | 00 | 00 | 00 | 00 | 00 | 00 | 00 | 00 | 00 | 00 | 00 | 00 | 00 | 00 |
| 0080 | 00 | 00 | 00 | 00 | 00 | 00 | 00 | 00 | 00 | 00 | 00 | 00 | 00 | 00 | 00 | 00 |
| 0090 | 00 | 00 | 00 | 00 | 00 | 00 | 00 | 00 | 00 | 00 | 00 | 00 | 00 | 00 | 00 | 00 |
| 00A0 | 00 | 00 | 01 | 01 | 01 | 01 | 01 | 01 | 01 | 01 | 01 | 01 | 01 | 01 | 01 | 01 |
| 00B0 | 01 | 01 | 01 | 01 | 01 | 01 | 01 | 02 | 02 | 02 | 02 | 02 | 02 | 02 | 02 | 02 |
| 00C0 | 02 | 02 | 03 | 03 | 03 | 03 | 03 | 03 | 03 | 04 | 04 | 04 | 04 | 04 | 04 | 04 |
| 00D0 | 05 | 05 | 05 | 06 | 06 | 06 | 06 | 07 | 07 | 07 | 08 | 08 | 08 | 08 | 09 | 09 |
| 00E0 | 09 | 0A | 0B | 0B | 0C | 0C | 0D | 0E | 0E | 0F | 0F | 10 | 10 | 11 | 12 | 12 |
| 00F0 | 13 | 14 | 15 | 17 | 18 | 19 | 1A | 1B | 1C | 1E | 1F | 20 | 21 | 22 | 23 | 25 |
| 0100 | 00 | 00 | 00 | 00 | 00 | 00 | 00 | 00 | 00 | 00 | 00 | 00 | 00 | 00 | 00 | 00 |
| 0110 | 00 | 00 | 00 | 00 | 00 | 00 | 01 | 01 | 01 | 01 | 01 | 01 | 01 | 01 | 01 | 01 |
| 0120 | 01 | 01 | 01 | 01 | 01 | 01 | 01 | 01 | 01 | 02 | 02 | 02 | 02 | 02 | 02 | 02 |
| 0130 | 02 | 02 | 02 | 03 | 03 | 03 | 03 | 03 | 03 | 03 | 04 | 04 | 04 | 04 | 04 | 04 |
| 0140 | 05 | 05 | 05 | 05 | 06 | 06 | 06 | 07 | 07 | 07 | 07 | 08 | 08 | 08 | 09 | 09 |
| 0150 | 09 | 0A | 0A | 0B | 0C | 0C | 0D | 0D | 0E | 0F | 0F | 10 | 10 | 11 | 11 | 12 |
| 0160 | 13 | 14 | 15 | 16 | 18 | 19 | 1A | 1B | 1C | 1D | 1F | 20 | 21 | 22 | 23 | 24 |
| 0170 | 26 | 29 | 2B | 2D | 2F | 32 | 34 | 36 | 39 | 3B | 3D | 40 | 42 | 44 | 47 | 49 |
| 0180 | 00 | 00 | 00 | 00 | 00 | 00 | 00 | 00 | 00 | 00 | 00 | 00 | 00 | 00 | 00 | 00 |
| 0190 | 00 | 01 | 01 | 01 | 01 | 01 | 01 | 01 | 01 | 01 | 01 | 01 | 01 | 01 | 01 | 01 |
| 01A0 | 01 | 01 | 02 | 02 | 02 | 02 | 02 | 02 | 02 | 02 | 02 | 03 | 03 | 03 | 03 | 03 |
| 01B0 | 03 | 03 | 04 | 04 | 04 | 04 | 04 | 05 | 05 | 05 | 05 | 06 | 06 | 06 | 06 | 06 |
| 01C0 | 07 | 07 | 08 | 08 | 09 | 09 | 09 | 0A | 0A | 0B | 0B | 0C | 0C | 0C | 0D | 0D |
| 01D0 | 0E | 0F | 10 | 11 | 11 | 12 | 13 | 14 | 15 | 16 | 17 | 18 | 18 | 19 | 1A | 1B |
| 01E0 | 1C | 1E | 20 | 22 | 23 | 25 | 27 | 29 | 2A | 2C | 2E | 30 | 31 | 33 | 35 | 37 |
| 01F0 | 39 | 3D | 40 | 44 | 47 | 4B | 4E | 52 | 55 | 59 | 5C | 60 | 63 | 67 | 6A | 6E |
| 0200 | 00 | 00 | 00 | 00 | 00 | 00 | 00 | 00 | 00 | 00 | 00 | 00 | 00 | 00 | 01 | 01 |
| 0210 | 01 | 01 | 01 | 01 | 01 | 01 | 01 | 01 | 01 | 01 | 01 | 01 | 02 | 02 | 02 |
| 0220 | 02 | 02 | 02 | 02 | 02 | 03 | 03 | 03 | 03 | 03 | 03 | 03 | 04 | 04 | 04 | 04 |
| 0230 | 04 | 04 | 05 | 05 | 05 | 06 | 06 | 06 | 07 | 07 | 07 | 07 | 08 | 08 | 08 | 09 |
| 0240 | 09 | 0A | 0A | 0B | 0B | 0C | 0D | 0D | 0E | 0E | 0F | 0F | 10 | 11 | 11 | 12 |
| 0250 | 13 | 14 | 15 | 16 | 17 | 18 | 1A | 1B | 1C | 1D | 1E | 1F | 21 | 22 | 23 | 24 |
| 0260 | 26 | 28 | 2B | 2D | 2F | 32 | 34 | 36 | 39 | 3B | 3D | 40 | 42 | 44 | 47 | 49 |
| 0270 | 4C | 51 | 56 | 5A | 5F | 64 | 68 | 6D | 72 | 76 | 7B | 80 | 84 | 89 | 8E | 92 |
| 0280 | 00 | 00 | 00 | 00 | 00 | 00 | 00 | 00 | 00 | 00 | 00 | 01 | 01 | 01 | 01 | 01 |
| 0290 | 01 | 01 | 01 | 01 | 01 | 01 | 01 | 01 | 01 | 02 | 02 | 02 | 02 | 02 | 02 | 02 |
| 02A0 | 02 | 02 | 03 | 03 | 03 | 03 | 03 | 04 | 04 | 04 | 04 | 04 | 04 | 05 | 05 | 05 |
| 02B0 | 05 | 06 | 06 | 06 | 07 | 07 | 07 | 08 | 08 | 09 | 09 | 09 | 0A | 0A | 0A | 0B |
| 02C0 | 0B | 0C | 0D | 0D | 0E | 0F | 10 | 10 | 11 | 12 | 13 | 13 | 14 | 15 | 15 | 16 |
| 02D0 | 17 | 19 | 1A | 1C | 1D | 1F | 20 | 21 | 23 | 24 | 26 | 27 | 29 | 2A | 2C | 2D |
| 02E0 | 2F | 32 | 35 | 38 | 3B | 3E | 41 | 44 | 47 | 4A | 4C | 4F | 52 | 55 | 58 | 5B |
| 02F0 | 5F | 65 | 6B | 71 | 77 | 7D | 82 | 88 | 8E | 94 | 9A | A0 | A5 | AB | B1 | B7 |
| 0300 | 00 | 00 | 00 | 00 | 00 | 00 | 00 | 00 | 00 | 00 | 01 | 01 | 01 | 01 | 01 | 01 |
| 0310 | 01 | 01 | 01 | 01 | 01 | 01 | 02 | 02 | 02 | 02 | 02 | 02 | 02 | 02 | 02 | 03 |
| 0320 | 03 | 03 | 03 | 03 | 04 | 04 | 04 | 04 | 04 | 05 | 05 | 05 | 05 | 06 | 06 | 06 |
| 0330 | 06 | 07 | 07 | 08 | 08 | 08 | 09 | 09 | 0A | 0A | 0B | 0B | 0C | 0C | 0C | 0D |
| 0340 | 0E | 0E | 0F | 10 | 11 | 12 | 13 | 14 | 15 | 15 | 16 | 17 | 18 | 19 | 1A | 1B |
| 0350 | 1C | 1E | 1F | 21 | 23 | 25 | 26 | 28 | 2A | 2C | 2D | 2F | 31 | 33 | 34 | 36 |
| 0360 | 39 | 3C | 40 | 43 | 47 | 4A | 4E | 51 | 55 | 58 | 5C | 5F | 63 | 66 | 6A | 6D |

Entire contents of Appendix '

```
0370   73 7A 80 87 8E 95 9C A3 AA B1 B8 BF C6 CD D4 DB
0380   00 00 00 00 00 00 00 00 01 01 01 01 01 01 01 01
0390   01 01 01 01 02 02 02 02 02 02 02 02 03 03 03 03
03A0   03 03 04 04 04 04 05 05 05 05 06 06 06 06 07 07
03B0   07 08 08 09 09 0A 0A 0B 0B 0C 0C 0D 0D 0E 0F 0F
03C0   10 11 12 13 14 15 16 17 18 19 1A 1B 1C 1D 1E 1F
03D0   21 23 25 27 29 2B 2D 2F 31 33 35 37 39 3B 3D 3F
03E0   42 46 4A 4F 53 57 5B 5F 63 67 6B 6F 73 77 7B 7F
03F0   86 8E 96 9E A6 AE B7 BF C7 CF D7 DF E8 F0 F8 FF
0400   00 00 00 00 00 00 00 00 00 00 00 00 00 00 00 00
0410   00 00 00 00 00 00 00 00 00 00 00 00 00 00 00 00
0420   00 00 00 00 00 00 00 00 00 00 00 00 00 00 00 00
0430   00 00 00 00 00 00 00 00 00 00 00 00 00 00 00 00
0440   00 00 00 00 00 00 00 00 00 00 00 00 00 00 00 00
0450   00 00 00 00 00 00 00 00 00 00 00 00 00 00 00 00
0460   00 00 00 00 00 00 00 00 00 00 00 00 00 00 00 00
0470   00 00 00 00 00 00 00 00 00 00 00 00 00 00 00 00
0480   00 00 00 00 00 00 00 01 01 01 01 01 01 01 01 01
0490   01 01 01 02 02 02 02 02 02 02 03 03 03 03 03 03
04A0   04 04 04 04 05 05 05 06 06 06 06 07 07 07 08 08
04B0   08 09 0A 0A 0B 0B 0C 0C 0D 0E 0E 0F 0F 10 10 11
04C0   12 13 14 15 17 18 19 1A 1B 1C 1D 1F 20 21 22 23
04D0   25 27 2A 2C 2E 31 33 35 38 3A 3C 3E 41 43 45 48
04E0   4B 50 54 59 5E 62 67 6C 70 75 7A 7E 83 87 8C 91
04F0   98 A1 AA B3 BD C6 CF D8 E2 EB F4 FD FF FF FF FF
0500   00 00 00 00 01 01 01 01 01 01 01 02 02 02 02 02
0510   02 03 03 03 04 04 04 04 05 05 05 06 06 06 06 07
0520   07 08 08 09 09 0A 0B 0B 0C 0C 0D 0E 0E 0F 0F 10
0530   11 12 13 14 15 16 18 19 1A 1B 1C 1D 1F 20 21 22
0540   24 26 28 2B 2D 2F 32 34 36 39 3B 3D 40 42 44 47
0550   4A 4F 53 58 5D 61 66 6A 6F 74 78 7D 82 86 8B 8F
0560   96 A0 A9 B2 BB C5 CE D7 E0 EA F3 FC FF FF FF FF
0570   FF FF FF FF FF FF FF FF FF FF FF FF FF FF FF FF
0580   00 00 00 01 01 01 01 02 02 02 02 02 03 03 03 03
0590   04 04 04 05 05 06 06 07 07 07 08 08 09 09 0A 0A
05A0   0B 0C 0C 0D 0E 0F 10 11 12 13 13 14 15 16 17 18
05B0   19 1B 1D 1E 20 22 23 25 27 29 2A 2C 2E 30 31 33
05C0   36 39 3D 40 44 47 4B 4E 51 55 58 5C 5F 63 66 6A
05D0   6F 76 7D 84 8B 92 99 A0 A7 AE B4 BB C2 C9 D0 D7
05E0   E2 EF FD FF FF FF FF FF FF FF FF FF FF FF FF FF
05F0   FF FF FF FF FF FF FF FF FF FF FF FF FF FF FF FF
0600   00 00 01 01 01 01 02 02 02 03 03 03 03 04 04 04
0610   05 05 06 07 07 08 08 09 09 0A 0B 0B 0C 0C 0D 0D
0620   0E 0F 11 12 13 14 15 16 18 19 1A 1B 1C 1D 1F 20
0630   21 24 26 28 2B 2D 2F 32 34 36 39 3B 3D 40 42 44
0640   48 4C 51 56 5A 5F 63 68 6D 71 76 7B 7F 84 88 8D
0650   94 9D A7 B0 B9 C2 CC D5 DE E7 F1 FA FF FF FF FF
0660   FF FF FF FF FF FF FF FF FF FF FF FF FF FF FF FF
0670   FF FF FF FF FF FF FF FF FF FF FF FF FF FF FF FF
0680   00 00 01 01 01 02 02 03 03 03 04 04 04 05 05 05
0690   06 07 07 08 09 0A 0A 0B 0C 0C 0D 0E 0F 0F 10 11
06A0   12 13 15 16 18 19 1B 1C 1D 1F 20 22 23 25 26 28
06B0   2A 2D 30 32 35 38 3B 3E 41 44 47 4A 4D 4F 52 55
06C0   5A 5F 65 6B 71 76 7C 82 88 8E 93 99 9F A5 AB B0
06D0   B9 C5 D0 DC E7 F3 FE FF FF FF FF FF FF FF FF FF
```

```
06E0   FF FF FF FF FF FF FF FF FF FF FF FF FF FF FF FF
06F0   FF FF FF FF FF FF FF FF FF FF FF FF FF FF FF FF
0700   00 00 01 01 02 02 03 03 03 04 04 05 05 06 06 07
0710   07 08 09 0A 0B 0C 0C 0D 0E 0F 10 11 12 12 13 14
0720   15 17 19 1B 1C 1E 20 22 23 25 27 29 2A 2C 2E 30
0730   32 36 39 3D 40 43 47 4A 4E 51 55 58 5C 5F 63 66
0740 · 6B 72 79 80 87 8E 95 9C A3 AA B1 B8 BF C6 CD D4
0750   DE EC FA FF FF FF FF FF FF FF FF FF FF FF FF FF
0760   FF FF FF FF FF FF FF FF FF FF FF FF FF FF FF FF
0770   FF FF FF FF FF FF FF FF FF FF FF FF FF FF FF FF
0780   00 01 01 02 02 03 03 04 04 05 05 06 06 07 07 08
0790   08 09 0A 0B 0C 0D 0E 0F 10 11 12 13 15 16 17 18
07A0   19 1B 1D 1F 21 23 25 27 29 2B 2D 2F 31 33 35 37
07B0   3A 3F 43 47 4B 4F 53 57 5B 5F 63 67 6B 6F 73 77
07C0   7D 85 8E 96 9E A6 AE B6 BE C6 CE D6 DF E7 EF F7
07D0   FF FF FF FF FF FF FF FF FF FF FF FF FF FF FF FF
07E0   FF FF FF FF FF FF FF FF FF FF FF FF FF FF FF FF
07F0   FF FF FF FF FF FF FF FF FF FF FF FF FF FF FF FF
```

0178082

CLAIMS:

1. A correlator circuit (10) for producing digital numbers, proportional to the signal power, at a selected frequency, in a group of received digital samples, said circuit (10) characterized by:

a storage means (18) addressed sequentially by binary numbers, each binary number being composed of both the magnitude portion (20b) of a received digital sample (20a) and the magnitude portion (51b) of a digital reference signal sample (51a); and

circuit means (36, 38, 39) for cumulatively producing, for each group of received digital samples, first and second accumulated signals.

2. The correlator circuit (10) of claim 1 wherein said circuit means comprises a binary adder means (36) and two storage means (38, 39), interconnected in a serial relationship between the output (Z) and one input (B) of said adder means.

3. The correlator circuit (10) of claim 1, wherein said digital reference signal samples (51a) are digital samples, representative of a selected tone, alternately in phase and in phase quadrature.

4. The correlator circuit (10) of claim 2, wherein said digital reference signal samples (51a) are digital samples, representative of a selected tone, alternately in phase and in phase quadrature.

5. The correlator circuit (10) of claim 1, wherein said digital reference signal samples (51a) are binary samples, representative of the product of an analogue sine-wave and a finite impulse response characteristic, alternately in phase and in phase quadrature.

6. The correlator circuit (10) of claim 2, wherein said digital reference signal samples (51a) are binary samples, representative of the product of an analogue sine-wave and a finite impulse response characteristic, alternately in phase and in phase quadrature.

FIG. 1

FIG. 2

FIG. 3